# EUROPÄISCHE PATENTANMELDUNG

(11) **EP 3 974 597 A1**
(43) Veröffentlichungstag der Anmeldung: **30.03.2022**
(21) Anmeldenummer: 21195020.9
(22) Anmeldetag: 06.09.2021
(51) Int. Cl.: E04D 11/00, F24S 20/67, F24S 25/40, F24S 25/61, H02S 20/24, F24S 25/00

(54) **DACHAUFSTÄNDERUNGSSYSTEM, DACHAUFSTÄNDERUNG UND VERFAHREN ZUM AUFBAU EINER DACHAUFSTÄNDERUNG**

(30) Priorität: 28.09.2020 DE 102020005908
(71) Anmelder: Optigrün international AG, 72505 Krauchenwies-Göggingen (DE)
(72) Erfinder: REISER, Otto, 72505 Krauchenwies-Göggingen (DE); BÖSE, Oliver, 72505 Krauchenwies-Göggingen (DE)
(74) Vertreter: Tomerius, Isabel

(57) **Zusammenfassung**

Die Erfindung betrifft ein Dachaufständerungssystem für eine Dachfläche (2), umfassend wenigstens eine Dachaufständerung (1) und eine Dachauflast (3), wobei die Dachauflast (3) wenigstens ein Dränageelement (310) und/oder eine reißfeste Schicht (311) umfasst und die Dachaufständerung (1) einen Basisteil (11) sowie einen Trageteil (10) aufweist, wobei der Basisteil (11) eine Fußplatte (110) und zwei von der Fußplatte (110) ausgehende Fußstützen (112, 113) aufweist und wobei der Trageteil (10) mit dem Basisteil (11) über die Fußstützen (112, 113) verbindbar und weiterhin zum Befestigen wenigstens eines Gegenstandes (4, 5) ausgebildet ist, wobei die Fußplatte (110) zur Verankerung der Dachaufständerung (1) unter dem Dränageelement (310) und/oder der reißfesten Schicht (311) angeordnet ist. Die Erfindung betrifft ferner eine Dachaufständerung für ein derartiges System und ein Verfahren zur Installation eines derartigen Systems.

## Beschreibung

Die Erfindung betrifft ein Dachaufständerungssystem für eine Dachfläche, eine Dachaufständerung zur Verwendung auf einer Dachfläche und ein Verfahren zur Installation eines derartigen Dachaufständerungssystems.

Gattungsgemäße Dachaufständerungssysteme umfassen wenigstens eine Dachaufständerung, die als Ständer beziehungsweise Halterung dient, an der weitere Gegenstände auf einem Dach beziehungsweise einer Dachfläche befestigbar sind. Die Dachaufständerungen können beispielsweise dazu genutzt werden, Solarpaneele, Sonnendächer, einen Sichtschutz, Werbetafeln oder ähnliches auf einem Dach zu installieren. Eine besonders typische Anwendung liegt in der Installation von Solarpaneelen. Das Dachaufständerungssystem umfasst eine Dachauflast. Derartige Dachauflasten sind beispielsweise Dachbegrünungen oder Kiesschüttungen. Sie umfassen wenigstens eine reißfeste Schicht und/oder wenigstens ein Dränageelement und normalerweise eine aus mehreren Dränageelementen gebildete Dränageschicht. Als Dränageelemente kommen beispielsweise flächige Dränagesysteme aus Platten oder Matten infrage, die eine Faser-, Wirrgelege, Flocken-, Gitter- oder Noppenstruktur aufweisen. Ebenfalls bekannt sind Dränageplatten mit perforierter Bodenplatte und/oder Speichermulden oder wasserspeichernden Schaumstoffen zur Aufnahme von Überschusswasser. Die Dränageelemente sorgen dabei nicht nur für den Abfluss von überschüssigem Wasser vom Dach, sondern können auch eine Speicherfunktion für Wasser, beispielsweise ein Dauerspeichervolumen, aufweisen, in dem Wasser zurückgehalten wird (sogenannte Wasser-Retentionsboxen). Auf diese Weise werden beispielsweise Pflanzen einer Dachbegrünung dauerhaft mit Wasser versorgt. Ein weiteres Beispiel für ein Dränageelement weist eine kastenartige Struktur mit einem von einem gitterförmigen Traggerüst definierten Hohlraum auf. Die Boxen werden üblicherweise großflächig nebeneinander auf der Dachfläche ausgelegt, um eine Schicht zu bilden, in der Wasser in Richtung auf einen oder mehrere Dachabflüsse fließen kann. Weisen diese Abflüsse einen Ablauf auf, der gegenüber der Fließebene der Boxen nach oben versetzt angeordnet ist, ergibt sich auch in diesem Fall ein Dauerspeichervolumen und damit ein dauerhafter Wasservorrat zur Versorgung der Bepflanzung der Dachbegrünung. Außerdem ist es bekannt, eine Abflussdrossel vorzusehen. Das Dauerspeichervolumen übersteigendes überschüssiges Wasser kann so mit einer vorgegebenen verzögerten Abflussgeschwindigkeit der Kanalisation zugeleitet werden. Die reißfeste Schicht ist beispielsweise eine Schutzschicht oder Filterschicht. Die Schutzschicht wird auf der Dachoberfläche genutzt, um die Dachhaut vor Beschädigungen zu schützen, die Filterschicht, um Schüttgut zurückzuhalten und an einem Eindringen in unter der reißfesten Schicht liegende Schichten wie die Dränageschicht oder in einen Dachabfluss zu verhindern. Beispiele für entsprechende Dachauflasten und Dränageelemente sowie reißfeste Schichten finden sich in den weiteren Anmeldungen der Anmelderin DE 10 333 113 B3, EP 2 982 810 A1 und EP 3 202 995 A1.

Auf einem Dach mit einer derartigen Dachauflast soll die Dachaufständerung so angeordnet werden, dass diese weitere Gegenstände sicher befestigen kann. Die Dachaufständerung muss daher stabil und insbesondere verkippsicher in sämtliche Richtungen sein. Hierfür weist die Dachaufständerung einen Basisteil sowie einen Trageteil auf. Während der Basisteil für einen sicheren Stand der Dachaufständerung sorgt, ist der Trageteil dazu ausgebildet, weitere Gegenstände zu tragen. Im Stand der Technik wird die Dachaufständerung insbesondere über den Basisteil typischerweise entweder an der Dachfläche oder der Dachauflast befestigt. Hierfür weist der Basisteil Befestigungsmittel auf, beispielsweise Löcher zur Aufnahme von Schrauben, über die er mit der Dachfläche oder der Dachauflast verschraubt werden kann. Insbesondere zur Anbringung an der Dachauflast sind auch Befestigungsmittel in Form von Klemmen, Rasteinrichtungen oder beliebige andere Befestigungsmittel möglich. Bekannt ist beispielsweise, Streben an der Oberseite eines speziell dafür mit Halterungen für die Streben versehenen Dränageelements zu verschrauben und das so modifizierte Dränageelement mit herkömmlichen Dränageelementen auf der Dachfläche auszulegen. Anschließend werden auf alle Dränageelemente dann die weiteren Schichten der Dachbegrünung aufgebracht. Nachteilig an einer derartigen Befestigung der Dachaufständerung ist zum einen, dass die Dachhaut bei einer Befestigung an der Dachfläche beschädigt wird und es im schlimmsten Fall zu einer Undichtigkeit des Daches oder zu unerwünschten Wärmebrücken kommen kann. Im Fall der Befestigung an der Dachauflast sind spezielle Bauteile wie die erwähnten modifizierten Dränageelemente oder aber zumindest ein erhöhter Arbeitsaufwand bei der zusätzlichen Befestigung der Dachaufständerung erforderlich, und die Befestigungsmittel sind zusätzliche Fehlerquellen, die beispielsweise durch Materialermüdung zu einem Versagen der Dachaufständerung führen können oder die Dachauflast im Bereich der Befestigungsstellen schwächen.

Es ist daher die Aufgabe der vorliegenden Erfindung, ein Dachaufständerungssystem sowie eine Dachaufständerung und ein Verfahren zu dessen Installation anzugeben, bei denen eine potentielle Undichtigkeit des Daches oder Wärmebrücken sicher vermieden werden. Ein weiteres Ziel sind eine stabile, einfache und unkomplizierte Installation sowie geringe Herstellungskosten.

Die Lösung der Aufgabe gelingt mit einem Dachaufständerungssystem, einer Dachaufständerung und einem Verfahren gemäß den unabhängigen Ansprüchen. Bevorzugte Weiterbildungen sind in den abhängigen Ansprüchen angegeben.

Die Erfindung betrifft somit in einem ersten Aspekt ein Dachaufständerungssystem für eine Dachfläche, umfassend wenigstens eine Dachaufständerung und eine Dachauflast, wobei die Dachauflast wenigstens ein Dränageelement und/oder wenigstens eine reißfeste Schicht umfasst und die Dachaufständerung einen Basisteil sowie einen Trageteil aufweist. Der Basisteil besitzt eine Fußplatte und zwei von der Fußplatte ausgehende Fußstützen, wobei der Trageteil mit dem Basisteil über die Fußstützen verbindbar und weiterhin zum Befestigen wenigstens eines Gegenstandes ausgebildet ist. Die Fußplatte ist zur Verankerung der Dachaufständerung unter dem Dränageelement und/oder der reißfesten Schicht angeordnet. Auf dem Dränageelement und/oder der reißfesten Schicht wird typischerweise eine Schicht Schüttgut, beispielsweise Kies oder ein Substrat für Pflanzen, aufgebracht. Das gemeinsame Gewicht des Dränageelements und/oder der reißfesten Schicht zusammen mit dem Schüttgut lastet dabei zumindest teilweise auf der Fußplatte und hält diese fest.

Die Fußplatte ist erfindungsgemäß also zwischen der Dachfläche und dem Dränageelement und/oder der reißfesten Schicht angeordnet. Dabei ist über der Fußplatte entweder wenigstens ein Dränageelement oder eine reißfeste Schicht angeordnet oder Dränageelement und reißfeste Schicht liegen übereinander gestapelt beide über der Fußplatte. Das Dränageelement oder die reißfeste Schicht liegt daher, insbesondere unmittelbar, auf der Fußplatte auf und drückt diese nach unten in Richtung der Dachfläche. Die Fußplatte weist eine flächige Ausdehnung auf, die zweckmäßig parallel zur Dachfläche beziehungsweise parallel zum Dränageelement und/oder der reißfesten Schicht verläuft. Sie ist daher zwischen dem Dränageelement oder der reißfesten Schicht und der Dachfläche eingeklemmt und dadurch sowohl gegen ein Verrutschen als auch gegen ein Verkippen gesichert. Um nun Gegenstände über dem Dränageelement auf dem Dach befestigen zu können, weist die Fußplatte zwei Fußstützen auf. Die Fußstützen sind mit der Fußplatte fest verbunden, beispielsweise verschweißt, und bilden zusammen ein einheitliches Bauteil, den Basisteil. Die Fußstützen sind zweckmäßig jeweils ein sich linear erstreckendes Bauteil, beispielsweise aus Stabilitätsgründen ein U-Profil, Rund- oder Kantrohr. Sie erstrecken sich bevorzugt im Wesentlichen senkrecht zur flächigen Ausdehnung der Fußplatte, insbesondere vertikal nach oben. Oberhalb der Dachfläche aufgestellt, erstrecken sich die Fußstützen also von der Dachfläche weg zweckmäßig über das Dränageelement und/oder die reißfeste Schicht hinaus und stehen zur Befestigung des Trageteils auf der der Fußplatte gegenüber liegenden Seite des Dränageelementes und/oder der reißfesten Schicht zur Verfügung.

Hierzu kann es beispielsweise vorgesehen sein, dass die Dachauflast mehrere Dränageelemente aufweist, die zusammen eine Dränageschicht bilden, und/oder dass die reißfeste Schicht aus mehreren Schichtelementen gebildet ist. Die einzelnen Dränageelemente und/oder Schichtelemente der reißfesten Schicht werden nebeneinander benachbart oder überlappend angeordnet und können miteinander verbunden sein, beispielsweise über Rastverbindungen, Schwalbenschwanz-Verbinder oder ähnliches und im Falle der reißfesten Schicht auch durch Verkleben, Vernähen, Verschweißen usw. Bei einem derartigen Aufbau kann vorgesehen sein, dass von den beiden Fußstützen des Basisteils wenigstens eine Fußstütze zwischen zwei Dränageelementen und/oder Schichtelementen angeordnet ist und zwischen diesen vertikal nach oben vorsteht. Alternativ kann es vorgesehen sein, dass das Dränageelement und/oder die reißfeste Schicht wenigstens eine Durchgangsöffnung und/oder eine Einbuchtung aufweist, durch die wenigstens eine der Fußstützen und vorzugsweise beide Fußstützen hindurchgeführt ist und in Richtung von der Dachfläche weg verläuft. Die Durchgangsöffnung ist dafür bevorzugt nur gerade so groß, dass die Fußstütze bequem hindurchgeführt werden kann, also nur geringfügig größer als der Außenumfang der Fußstütze. Die Fußstütze wird in der Durchgangsöffnung bevorzugt seitlich beziehungsweise in horizontaler Richtung von allen Seiten von der Dachauflast, insbesondere von ein und demselben Dränageelement und/oder ein und demselben Schichtelement der reißfesten Schicht, umgeben. Die Einbuchtung ist insbesondere in dem Bereich vorgesehen, in dem Dränageelemente und/oder Schichtelemente der reißfesten Schicht aneinander angrenzen. Sie befinden sich entweder nur in einem der angrenzenden Elemente oder in beiden. Im ersten Fall ist die Einbuchtung im Wesentlichen so groß, dass die Fußstütze bequem hindurchgeführt werden kann. Im zweiten Fall ist jede der Einbuchtungen in einem Dränageelement und/oder Schichtelement der reißfesten Schicht im Wesentlichen so groß, dass sie gemeinsam eine Fußstütze aufnehmen können. Die beiden Einbuchtungen der nebeneinanderliegenden Elemente bilden dann zusammen eine Durchgangsöffnung für die Fußstütze. Bei der Verwendung einer Einbuchtung wird die Fußstütze daher in horizontaler Richtung von wenigstens zwei Dränageelementen und/oder Schichtelementen der reißfesten Schicht umgeben. Der Trageteil und die Fußplatte des Basisteils liegen auf gegenüberliegenden Seiten des Dränageelements und/oder der reißfesten Schicht. Auf diese Weise ist die Dachaufständerung über die Fußplatte unter dem Dränageelement und/oder der reißfesten Schicht verankert und mit der Dachauflast, insbesondere auch dem Schüttgut, beschwert und weist somit eine ausreichende Standsicherheit auf. Es ist daher nicht notwendig und auch erfindungsgemäß nicht vorgesehen, die Dachaufständerung und insbesondere den Basisteil über weitere Befestigungsmittel an der Dachfläche oder der Dachauflast zu befestigen. Die Dachhaut muss daher zur Installation des erfindungsgemäßen Dachaufständerungssystems nicht verletzt werden. Es besteht keinerlei Gefahr für eine Undichtigkeit oder eine Wärmebrücke. Gleichzeitig wird bei der Installation Zeit eingespart, da die Verankerung des Basisteils der Dachaufständerung bei erfindungsgemäßer Installation ohne irgendwelche Befestigungsmittel zustande kommt, mit denen der Basisteil an der Dachauflast befestigt werden müsste. Insbesondere ist keinerlei Verschraubung oder sonstige feste Verbindung des Basisteils an einem Dränageelement erforderlich.

Da keine feste Verbindung des Basisteils mit der Dachauflast nötig ist, weist die erfindungsgemäße Dachaufständerung, und insbesondere deren Fußplatte, keine Durchgangsöffnungen, Ösen, Laschen, Klemmverbindungen, Bajonettverschlüsse oder ähnliches auf, die dafür vorgesehen sind, eine Verbindung mit der Dachauflast und/oder der Dachfläche herzustellen. Die Dachaufständerung ist vielmehr im erfindungsgemäßen Dachaufständerungssystem lose eingesteckt angeordnet. Eine seitliche Verschiebung und ein Verkippen der Dachaufständerung werden ausschließlich dadurch verhindert, dass ein Teil der Gewichtskraft der Dachauflast auf der Fußplatte ruht und die Fußstützen insbesondere gegenüber einer seitlichen Verschiebung ebenfalls an der Durchgangsöffnung durch das Dränageelement und/oder die reißfeste Schicht hindurch gesichert sind. Über die Größe der Fußplatte kann unter Berücksichtigung der geplanten Dachauflast eingestellt werden, mit welcher Gewichtskraft das Dachaufständerungssystem beaufschlagt wird. Je größer die Fläche der Fußplatte und je schwerer die auf ihr liegende Dachauflast, desto größer kann die Windangriffsfläche des Gegenstandes oder der Gegenstände sein, die sicher an dem Trageteil befestigt werden können.

Es würde grundsätzlich ausreichen, wenn eine der Fußstützen durch eine Durchgangsöffnung oder eine Einbuchtung des Dränageelements und/oder der reißfesten Schicht geführt ist und so zu einer Verankerung der Fußplatte beziehungsweise des Basisteils führt. Die zweite Fußstütze könnte in diesem Fall beispielsweise seitlich des Dränageelements und/oder der reißfesten Schicht vorstehen. Es ist allerdings bevorzugt, dass sämtliche Fußstützen der Dachaufständerung durch eine entsprechende Durchgangsöffnung oder eine Einbuchtung des Dränageelementes und/oder der reißfesten Schicht geführt sind. Entsprechend weist das Dränageelement und/oder die reißfeste Schicht in dieser Ausführungsform jeweils eine Durchgangsöffnung oder eine Einbuchtung pro Fußstütze auf. Die Dränageelemente, und auch die Schichtelemente der reißfesten Schicht, können dabei so ausgebildet sein, dass sie nur an einer Seite Einbuchtungen aufweisen. Derartige Einbuchtungen sind bevorzugt ausreichend groß, um die Fußstütze komplett aufzunehmen. Ein weiteres Dränageelement kann daher mit einer Seite, die keine Einbuchtungen aufweist, an der die Fußstütze aufnehmenden Seite des ersten Dränageelementes angeordnet werden. Alternativ kann das Dränageelement Einbuchtungen auf gegenüberliegenden Seiten aufweisen. Legt man derartige Dränageelemente aneinander und ordnet sie derart an, dass die jeweiligen Einbuchtungen benachbart sind, so bilden jeweils zwei Einbuchtungen benachbarter Dränageelemente eine Durchgangsöffnung für die Fußstütze. In diesem Fall sind die einzelnen Einbuchtungen zweckmäßig jeweils im Wesentlichen halb so groß wie der Querschnitt der Fußstütze. Dasselbe gilt für die Einbuchtungen der Schichtelemente der reißfesten Schicht.

Die reißfeste Schicht kann eine gegenüber herkömmlichen Dachlastaufbauten zusätzliche Schicht sein. Um erhöhten Aufwand und zusätzliche Kosten zu vermeiden, handelt es sich bevorzugt jedoch um eine Schicht, die bereits bisher Teil einer herkömmlichen Dachauflast gewesen ist. Die reißfeste Schicht ist dann bevorzugt eine Schutzschicht oder Filterschicht des Dachaufbaus. Die Schutzschicht liegt üblicherweise direkt auf der Dachoberfläche auf und schützt diese vor Beschädigungen. Die Filterschicht dient meist dazu, das Eindringen von Schüttgut, insbesondere Pflanzsubstrat, in einen Abfluss des Daches zu verhindern. Als Filterschicht ist die reißfeste Schicht in der Regel über einer Dränageschicht angeordnet und liegt bevorzugt unmittelbar auf dieser. Die Filterschicht verhindert dann das Eindringen von Schüttgut auch in die Dränageschicht. Die Fußplatte der Fußstützen kann entweder unter der Filterschicht oder der Dränageschicht angeordnet werden. Erstere Variante eignet sich vor allem für Fälle, in denen eine relative geringe Windbelastung auf den an der Dachaufständerung befestigten Gegenstand einwirkt und/oder die auf der reißfesten Schicht liegende weitere Dachauflast eine relativ hohes Gewicht besitzt. Letztere Variante kommt aufgrund der höheren Stabilität der Dränageschicht und deren zusätzlichen Gewichts mit einer geringeren weiteren Dachauflast aus. Ist die reißfeste Schicht eine Schutzschicht, steht die Fußplatte mit ihrer Unterseite auf der Dachfläche, während ihre Oberseite von der Schutzschicht überdeckt wird. Die Beschaffenheit der reißfesten Schicht ist grundsätzlich nicht besonders beschränkt. Sie sollte so reißfest sein, dass sie unter den Belastungen, die im Betrieb auf dem Dach insbesondere über eine an ihr gehaltene Fußstütze auf sie einwirken, nicht beschädigt wird und insbesondere nicht einreißt. Ist die reißfeste Schicht eine Filterschicht, sollte sie wasserdurchlässig sein, damit sich keine Staunässe in den darüber liegenden Schichten bildet. Aus diesem Grund sind gitter- oder netzartige Schichten sowie wasserdurchlässige Gewebe oder Vliesmaterialien bevorzugt. Geeignete Materialien sind zweckmäßig witterungsbeständig und bestehen insbesondere aus Kunststoff. Entsprechende Eigenschaften und Materialien kann die reißfeste Schicht aber auch in dem Fall aufweisen, dass es sich um eine Schutzschicht oder sonstige reißfeste Schicht handelt.

Wie eingangs bereits beschrieben wurde, existieren eine Reihe von Möglichkeiten, wie das Dränageelement konkret beschaffen sein kann. Grundsätzlich können im Rahmen der Erfindung alle bekannten Dränageelemente eingesetzt werden, in die eine Durchgangsöffnung und/oder Einbuchtung zur Durchführung einer Fußstütze eingebracht werden kann. Grundsätzlich kann die Dachauflast ein einzelnes, einstückiges Dränageelement aufweisen, welches je nach Größe einen unterschiedlichen Anteil der Dachfläche oder die gesamte Dachfläche abdeckt. In einer einfachen Ausführungsform kann das Dränageelement also zum Beispiel eine Dränageplatte oder -matte aus Faser- oder Wirrgelege oder Ähnlichem sein, in die nun an geeigneter Stelle wenigstens eine und bevorzugt pro Fußstütze einer Basisplatte oder gegebenenfalls mehrerer Basisplatten eine Durchgangsöffnung oder Einbuchtung eingebracht wird. Eine einfachere Installation ergibt sich allerdings, wenn die abzudeckende Dachfläche mit mehreren Dränageelementen belegt wird, die nebeneinander angeordnet sind und entweder lose oder miteinander verbunden sind. Es ist daher bevorzugt, dass die Dachauflast mehrere aneinander angrenzende und optional miteinander verbundene Dränageelemente aufweist. Gemäß einer bevorzugten Ausführungsform ist das Dränageelement als eine wenigstens einen Hohlraum definierende Stützstruktur ausgebildet, insbesondere als Wasser-Retentionsbox. Diese Dränageelemente werden in an sich bekannter Weise nebeneinander auf einer Dachfläche ausgelegt, gegebenenfalls miteinander verbunden und bilden so eine größere Dränagefläche.

Ist das Dränageelement als Wasser-Retentionsbox ausgebildet, kann es sich in einer Variante um ein solches mit einer Gitterkastenstruktur handeln, bevorzugt mit Öffnungen zu allen Seiten, was einen Wasserfluss in sämtliche Raumrichtungen erlaubt. Die Elemente werden meist durch Spritzguss hergestellt, wobei wenigstens ein Teil der Durchgangsöffnungen und/oder Einbuchtungen bereits bei der Herstellung so ausgebildet werden kann, dass eine der Fußstützen des Basisteils durch sie hindurchführbar ist. Denkbar ist, falls erforderlich, jedoch auch das nachträgliche Vergrößern von Gitteröffnungen oder das Neueinbringen von Durchgangsöffnungen/Einbuchtungen in Wasser-Retentionsboxen des Standes der Technik. Beispiele von Wasser-Retentionsboxen mit Gitterstruktur sind unter anderem in der EP 0943737 A1, WO 02/14608 A1 und AU 620283 B1 beschrieben.

In einer anderen Variante ist das Dränageelement als Dränageplatte mit Wasseraufnahmevertiefungen als Dauerspeichervolumen für Wasser ausgebildet. Diese Dränageelemente sind grundsätzlich bekannt und besitzen im Wesentlichen die Form eines Eierkartons oder einer Noppenplatte. Bei letzterer handelt es sich meist um eine geprägte oder tiefgezogene Kunststoffplatte mit ein- oder beidseitig vorstehenden Noppen, deren Inneres das Wasserspeichervolumen bereitstellt. Konkret kann auf das Drän- und Wasserspeicherelement FKD 25 der Anmelderin verwiesen werden. Für komplexere Dachbegrünungssysteme werden von der Anmelderin zum Beispiel Wasser-Retentionsboxen unter der Bezeichnung WRB 80F angeboten. Dieses und entsprechende Dränageelemente können im Rahmen der Erfindung ebenfalls verwendet werden. Sie umfassen eine Vielzahl rasterartig angeordneter napfförmiger Vertiefungen, die am oberen Rand durch Stegbereiche miteinander verbunden sind. Am oberen Rand können die einzelnen Näpfe jeweils durch Überlaufrinnen miteinander verbunden sein, die den Übertritt von Wasser von einem Napf in den nächsten erlauben. Zudem kann durch die Überlaufrinnen Wasser, das in den tieferliegenden, das Dauerspeichervolumen definierenden Napfbereichen nicht mehr aufgenommen werden kann, abfließen und einem Dachabfluss zugeführt werden. Bei einer derartigen Ausbildung des Dränageelements ist es bevorzugt, dass die wenigstens eine Durchgangsöffnung, bevorzugt alle Durchgangsöffnungen, so angeordnet ist, dass der Rand der Durchgangsöffnung im Bereich der Stegbereiche liegt. Dies verhindert einen unbeabsichtigten Abfluss von Wasser aus dem Dränageelement. In einer bevorzugten Ausführungsform ist ein über das gesamte Dränageelement verlaufender Stegbereich so ausgebildet, dass er in Längsrichtung gefaltet werden kann, um die über den Stegbereich verbundenen Teile des Elements, zum Beispiel zum Transport, aufeinander falten zu können. Dieser faltbare Stegbereich ist ein bevorzugter Anbringungsort für die wenigstens eine Durchgangsöffnung. Bekannt (zum Beispiel von der WRB 80F) sind außerdem flanschartige Randbereiche an wenigstens zwei gegenüberliegenden Außenrändern eines Dränageelementes. In der WRB 80F weisen diese Randstege lösbare Befestigungsmittel wie Rast-, Schnapp- oder Klickverbindungen auf, mittels derer zwei benachbarte, neben- oder übereinander liegende Dränageelemente aneinander befestigt werden können. Diese Randstege eignen sich ebenfalls zur Anordnung der wenigstens einen Durchgangsöffnung und/oder Einbuchtung, wobei diese bevorzugt an anderen Stellen als die lösbaren Befestigungsmittel platziert werden. Bei übereinander gelegten Dränageelementen liegen diese bevorzugt mit den Napföffnungen aufeinander zuweisend. Die Durchgangsöffnungen/Einbuchtungen für die Fußstützen gehen dann durch beide Lagen der Dränageelemente.

Ein wesentlicher Vorteil der Erfindung besteht darin, dass die Dachaufständerung mit einer Vielzahl von Dachauflasten verwendet werden kann, ohne dass die Struktur und der grundsätzliche Aufbau der Dachauflast verändert werden müssten. Insbesondere kann die herkömmliche Schichtabfolge unverändert beibehalten werden. Je nach Art der Dachfläche, auf der das erfindungsgemäße Dachaufständerungssystem aufgebaut werden soll, kann die erfindungsgemäße Dachaufständerung mit seinem Basisteil und konkret dessen Fußplatte entweder unmittelbar auf der Dachfläche oder auf einer Schutzschicht aufgestellt werden, die in an sich bekannter Weise zunächst auf der Dachfläche angeordnet wird. In einer Variante liegt also die Fußplatte unmittelbar auf der Dachfläche und das Dränageelement wiederum unmittelbar auf der Fußplatte und, in den seitlich über die Fußplatte überstehenden Bereichen, direkt auf der Dachfläche. Alternativ ist zwischen der Dachfläche und dem wenigstens einen Dränageelement eine Schutzschicht zum Schutz der Dachabdichtung, beispielsweise in Form eines Vliesmaterials, vorhanden. Entsprechend steht die Fußplatte dann auf der Schutzschicht und das Dränageelement liegt wiederum auf der Fußplatte und, in den seitlich über die Fußplatte überstehenden Bereichen, auf der Schutzschicht. Möglich ist auch, die Fußplatte des Basisteils unter der Schutzschicht anzuordnen, sodass die Fußplatte unmittelbar auf der Dachfläche aufliegt. Dies ist allerdings in solchen Fällen nicht bevorzugt, in denen die Gefahr besteht, dass die Dachabdichtung durch die Fußplatte beschädigt wird. Bei Verwendung mehrerer Dachaufständerungen werden deren Basisteile auf der Dachfläche oder der diese bedeckenden Schutzschicht aufgestellt, in den gewünschten Positionen ausgerichtet und mit dem oder den Dränageelement(en) und/oder der reißfesten Schicht überdeckt, wobei die Fußstützen durch die zugehörigen Durchgangsöffnungen oder Einbuchtungen geführt werden. Ergänzend oder alternativ ist es ebenfalls möglich, dass die Fußplatte auf das Dränageelement gestellt wird, welches wiederum direkt auf der Dachfläche oder auf der Schutzschicht angeordnet ist. Um eine ausreichende Befestigung der Fußplatte und damit der Dachaufständerung sicherzustellen, sind dann allerdings zumindest die reißfeste Schicht und eine auf dieser aufgebrachte Schicht Schüttgut auf der Fußplatte angeordnet. Ist dagegen die Fußplatte unter dem Dränageelement angeordnet, kann auf die reißfeste Schicht verzichtet werden. In diesem Fall kann das Schüttgut beispielsweise direkt auf das Dränageelement aufgetragen sein.

Um zu verhindern, dass Verunreinigungen wie Erde in das wenigstens eine Dränageelement eindringen, wird dieses bevorzugt auf seiner von der Dachfläche abgewandten Oberseite mit einer Filterschicht, insbesondere einem Filtervliesmaterial, überdeckt, wie grundsätzlich aus dem Stand der Technik bekannt. Bevorzugt handelt es sich bei der Filterschicht um eine reißfeste Schicht im Sinne der Erfindung. Alternativ kann die reißfeste Schicht auch eine Gitter- oder Gewebeschicht sein. Während bei der Gewebeschicht Kett- und Schussfäden miteinander verwoben sind, können die Gitter aus Längs- und Querstreben gebildet sein, die fest miteinander verbunden sind, wobei jeweils alle Querstreben und jeweils alle Längsstreben über ihre gesamte Länge in ein und derselben Ebene verlaufen oder auch sowohl Quer- als auch Längsstreben in einer Ebene liegen. Bevorzugte Gitterschichten sind Kunststoffgitter oder Kunststoffnetze. Auch die reißfeste Schicht und insbesondere konkret die Filterschicht weist bevorzugt jeweils eine Durchgangsöffnung und/oder Einbuchtung pro Fußstütze auf, durch die hindurch wenigstens eine Fußstütze des Basisteils geführt ist. Die reißfeste Schicht zählt dann ebenfalls zum auf der Fußplatte liegenden Teil der Dachauflast. Oberhalb des wenigstens einen Dränageelementes und gegebenenfalls der reißfesten Schicht befindet sich im Allgemeinen eine Schicht aus Schüttgut, insbesondere Pflanzsubstrat und/oder Kies. Diese Schicht trägt wesentlich zum Gewicht der Dachauflast und damit zur Beschwerung der Dachaufständerung bei. Die Berechnungen der zur sicheren Halterung der Dachaufständerung samt daran befestigten Gegenständen nötigen Auflast und der Dimensionierung der Fußplatte erfolgen auf an sich bekannte Weise analog zu den Berechnungen des Standes Technik. Dabei wird die auf der Dachauflast gegebenenfalls angepflanzte Bepflanzung meist nicht berücksichtigt, da deren Gewicht während Planung und Aufbau des Dachaufständerungssystems in der Regel schlecht abschätzbar ist. Insofern wird die Bepflanzung im Rahmen der Erfindung der Dachauflast nicht zugerechnet, obwohl eine Bepflanzung natürlich vorhanden sein kann.

Die Länge, mit der die Fußstützen über die Fußplatte des Basisteils vorstehen, ist zweckmäßig so bemessen, dass deren freie Enden nach Aufbringen der Dachauflast über diese herausragen. Zweckmäßig befinden sich die Befestigungsmittel, mit denen Basisteil und Trageteil der Dachaufständerung aneinander befestigt werden, ebenfalls oberhalb der Dachauflast. Dies erleichtert gegebenenfalls später erforderliche Änderungen oder Reparaturen am Dachaufständerungssystem und ermöglicht es, den Trageteil erst nach Aufbringung der Dachauflast zu montieren. Bevorzugt ist allerdings die vollständige Montage der Dachaufständerung mit Basis- und Trageteil, bevor die Dachauflast aufgebracht wird.

Die Erfindung eignet sich vorteilhaft für Dächer mit einer Kiesschüttung und/oder einer Dachbegrünung als Dachauflast. Zusammenfassend ist in letzterem Fall der bevorzugte Schichtaufbau wie folgt: Unmittelbar auf die Dachfläche wird eine Schutzschicht aufgebracht, auf der wenigstens ein Basisteil, bevorzugt mehrere Basisteile der Dachaufständerungen, aufgestellt und ausgerichtet werden. Hierauf werden die Dränageelemente in vorstehend beschriebener Art und Weise aufgelegt. Auf die Dränageelemente wiederum wird eine Filterschicht gelegt. Auf die Filterschicht wird eine Schicht aus Pflanzsubstrat aufgebracht. In den Bereichen mit Fußplatten ist der Schichtaufbau des Dachaufständerungssystems daher: Schutzschicht, Fußplatte, Dränageelement, Filterschicht, Pflanzsubstrat.

Wie bereits erläutert, ist die Dachaufständerung verbindungsfrei bezüglich der Dachfläche und der Dachauflast ausgebildet. Zur Halterung größerer Gegenstände ist es vorgesehen, wenigstens eine Dachaufständerung mit mehreren Fußstützen und insbesondere mehrere Dachaufständerungen mit jeweils mehreren Fußstützen zu verwenden. Die Basisteile der mehreren Dachaufständerungen sind dabei zweckmäßig nicht direkt aneinander befestigt. Eine Verbindung der Basisteile untereinander besteht allenfalls über die Trageteile. Bei einem Dachaufständerungssystem mit wenigstens zwei Dachaufständerungen können die Trageteile wenigstens zweier benachbarter Dachaufständerungen über wenigstens eine Trageschiene und/oder einen Windverband miteinander verbunden sein. Umfasst das Dachaufständerungssystem mehrere Dachaufständerungen, so ist bevorzugt, dass sämtliche Dachaufständerungen gleich ausgebildet sind.

Die eingangs genannte Aufgabe wird ebenfalls gelöst durch eine Dachaufständerung zur Verwendung auf einer Dachfläche, bevorzugt in einem hierin beschriebenen Dachaufständerungssystem und daher ebenfalls gemäß den vorstehenden Ausführungen. Sämtliche Merkmale, Vorteile und Wirkungen der Dachaufständerung, wie vorliegend für das Dachaufständerungssystem beschrieben, gelten ebenfalls für die erfindungsgemäße Dachaufständerung. Entsprechend gelten sämtliche Merkmale, Vorteile und Wirkungen der Dachaufständerung ebenfalls für das Dachaufständerungssystem. Es wird lediglich zur Vermeidung von Wiederholungen auf die jeweils anderen Ausführungen Bezug genommen.

Die erfindungsgemäße Dachaufständerung umfasst einen Basisteil und einen Trageteil. Der Basisteil wiederum weist eine Fußplatte und zwei von der Fußplatte ausgehende Fußstützen auf. Insbesondere ist der Basisteil dazu ausgebildet, die Dachaufständerung unter dem Dränageelement und/oder einer reißfesten Schicht der Dachauflast zu verankern und gleichzeitig über die Fußstützen den Trageteil zu tragen. Entsprechend ist der Trageteil mit dem Basisteil über die Fußstützen verbindbar ausgebildet. Darüber hinaus ist der Trageteil zum Befestigen wenigstens eines Gegenstandes an ihm ausgebildet. Um diesen Gegenstand auf dem Dach zu befestigen, wird überhaupt das erfindungsgemäße Dachaufständerungssystem mit der erfindungsgemäßen Dachaufständerung eingesetzt. Die Fußstützen des Basisteils und/oder der Trageteil sind beispielsweise als U-Profile ausgebildet und daher bei geringem Gewicht besonders steif. Alternativ können auch Rund- oder Kantrohre, anderer Profile oder Ähnliches eingesetzt werden. Die Fußplatte wiederum ist bevorzugt im Wesentlichen flach und vergleichsweise dünn. Sie hat in ihrer flächigen Ausdehnung eine Länge und eine Breite, die ihre Dicke um ein Vielfaches übersteigen. Um die Steifigkeit der Fußplatte zu erhöhen, kann sie mit wenigstens einem Versteifungselement, beispielsweise in Form einer Versteifungssicke oder Abkantung, versehen sein, die sich bevorzugt über wenigstens die Hälfte der Länge und/oder Breite der Fußplatte erstreckt. Selbst unter Berücksichtigung dieser Profile allerdings ist die Fußplatte deutlich länger und deutlich breiter als dick.

Die erfindungsgemäße Dachaufständerung zeichnet sich dadurch aus, dass die Fußplatte, abgesehen von gegebenenfalls vorhandenen Mitteln zur Befestigung der Fußstützen, frei ist von Befestigungsmitteln zur Befestigung der Dachaufständerung an der Dachfläche und/oder der Dachauflast und insbesondere keine Durchgangsbohrungen oder sonstige Durchgangsöffnungen aufweist. Dasselbe gilt für die Fußstützen, den Basisteil und die Dachaufständerung insgesamt. Die Dachaufständerung, insbesondere dessen Basisteil mit der Fußplatte, ist nicht dazu ausgebildet, fest mit dem Dach oder der Dachauflast verbunden zu werden, sondern ist nur lose, ohne zusätzliche Befestigungsmittel, in die Dachauflast eingefügt. Sie wird in der Dachauflast nur durch Aufliegen zumindest eines Teils der Dachauflast auf der Fußplatte gehalten, insbesondere durch das Durchführen wenigstens einer Fußstütze durch wenigstens eine Einbuchtung im Randbereich von benachbarten Dränageelementen oder Segmenten aus reißfester Schicht oder durch eine Durchgangsöffnung in einer ansonsten zusammenhängenden Schicht der Dachauflast, beispielsweise einem Dränageelement und/oder der reißfesten Schicht. Die Verankerung der erfindungsgemäßen Dachaufständerung erfolgt daher allein durch das Aufliegen zumindest eines Teils der Dachauflast auf der Fußplatte und das seitliche Umschließen wenigstens einer Fußstütze durch eben diese Teile der Dachauflast.

Der Basisteil kann bevorzugt einteilig mit den Fußstützen ausgebildet sein. Beispielsweise sind die Fußstützen stoffschlüssig mit der Fußplatte verbunden. In einer bevorzugten Ausführungsform besteht der Basisteil aus Metall, insbesondere Aluminium oder Edelstahl, wobei die Fußstützen bevorzugt an die Fußplatte geschweißt sind. Auf diese Weise kann der Basisteil insgesamt als zusammenhängendes Bauteil in dem Dachaufständerungssystem verbaut werden, ohne dass weitere Handgriffe notwendig sind. Gleichzeitig ergibt sich eine stabile Konstruktion.

Der Trageteil weist bevorzugt eine der Anzahl der Fußstützen entsprechende Anzahl an mit den Fußstützen verbindbaren Tragestützen auf. Die Tragestützen sind beispielsweise ebenfalls als U-Profile, Kant- oder Rundrohre ausgebildet und erstrecken sich von den Fußstützen aus vertikal nach oben. Zur Befestigung können die Enden der Fuß- und Tragstützen beispielsweise mit Gewinden versehen sein, welche ein unmittelbares Verschrauben der Stützen aneinander ermöglichen. Denkbar sind auch seitlich über die Stützen vorstehende Flansche, die nach dem Aufsetzen einer Tragstütze auf eine Fußstütze aufeinander zu liegen kommen und anschließend miteinander verschraubt oder in sonstiger Weise aneinander gesichert werden. Um die Befestigung der Tragestützen an den Fußstützen möglichst stabil auszubilden, ist es jedoch bevorzugt, dass die Fußstützen und Tragestützen ineinander einsteckbar sind, wobei die Tragestützen besonders bevorzugt in die Fußstützen eingeschoben werden können. Die Tragestützen haben daher einen verringerten Durchmesser gegenüber den Fußstützen, sodass sie gerade in die Fußstützen hineinpassen und dort befestigbar sind. Um unterschiedliche Gesamthöhen der Dachaufständerung zu ermöglichen, sind die Fußstützen und Tragestützen bevorzugt gegeneinander höhenverstellbar. Insbesondere können die Tragestützen in unterschiedlichen Höhepositionen an den Fußstützen befestigt werden. Hierfür sind je eine Fußstütze und eine Tragestütze mittels einer Befestigungseinrichtung gegeneinander fixierbar, wobei die Befestigungseinrichtung bevorzugt einen in komplementäre Durchgangsbohrungen durch Fußstütze und Tragestützen geschobenen Bolzen mit optionalem Sicherungssplint umfasst. Insbesondere sind mehrere Durchgangsbohrungen in unterschiedlichen Befestigungspositionen an den Fußstützen und/oder den Tragestützen vorhanden, sodass die Tragestützen in unterschiedlichen Höhenpositionen an den Fußstützen befestigbar sind. Die Befestigungspositionen beziehungsweise die Befestigungseinrichtung sind bevorzugt so angeordnet, dass sie oberhalb der Dachauflast liegen. Dies erleichtert die Montage und insbesondere spätere Reparaturen oder Umbauten an der Tragkonstruktion und verhindert die Verschmutzung und eventuelle Blockade der Befestigungseinrichtung durch Material der Dachauflast.

Die Tragestützen des Trageteiles sind bevorzugt über eine Tragestrebe miteinander verbunden. Sowohl die Tragestützen als auch die Tragestrebe sind dabei erneut bevorzugt als Rund- oder Kantrohre und besonders als U-Profile ausgebildet und bestehen bevorzugt aus Metall, insbesondere Aluminium oder Edelstahl. Zweckmäßig sind die Tragestützen mit der Tragestrebe verschweißt. Die Tragestrebe wiederum ist zweckmäßig derjenige Teil des Trageteils, der zum Befestigen wenigstens eines Gegenstandes ausgebildet ist. Hierfür weist die Tragestrebe beispielsweise wenigstens eine Halterung, insbesondere zwei Halterungen, auf. Die wenigstens eine Halterung ist dabei so ausgebildet und derart an der Tragestrebe angeordnet, dass sie zu Halteeinrichtungen des zu befestigenden Gegenstandes passt. In diesem Fall muss die Dimensionierung des Gegenstandes im Vorfeld bekannt sein, sodass die Halterungen entsprechend angeordnet werden können. Gemäß einer bevorzugten Ausführungsform der Erfindung wird die Flexibilität weiter erhöht, indem der Trageteil und insbesondere die Tragestrebe eine Verstellschiene aufweist, welche die Befestigung verschiedener Gegenstände oder eines Gegenstandes in unterschiedlichen Positionen ermöglicht. Die gelingt dadurch, dass die wenigstens eine Halterung entlang der Verstellschiene verschiebbar gelagert ist. Die wenigstens eine Halterung weist hierfür Befestigungsmittel auf, mit denen sie an unterschiedlichen Positionen der Verstellschiene fixierbar ist, beispielsweise mittels einer Schraubklemmung. Bei dieser Ausführungsform der Erfindung kann die Dachaufständerung nach ihrem Aufbau auf einem Dach noch an eine Vielzahl verschiedener Gegenstände angepasst werden. Beispielsweise ist es möglich, den Abstand zwischen zwei verschiebbaren Halterungen auf einer Tragschiene zu verändern und so beispielsweise an verschiedene Größen und Typen von Solarpaneelen anzupassen.

Die Gegenstände, die an der erfindungsgemäßen Dachaufständerung oder an dem erfindungsgemäßen Dachaufständerungssystem befestigt werden können, sind nicht weiter beschränkt. Grundsätzlich eignen sich Dachaufständerung und System für alle Gegenstände, die auch bereits bisher auf einem Dach aufgeständert wurden. Beispiele sind Sonnendächer, Sichtschutzeinrichtungen, Werbe- oder Informationstafeln oder ähnliches. Besonders bevorzugt ist der Trageteil der Dachaufständerung dazu ausgebildet, ein Solarpaneel oder mindestens eine Trageschiene zu befestigen, die bevorzugt zum Befestigen wenigstens eines Solarpaneels ausgebildet ist. Der bereits genannte Gegenstand ist dann entsprechend ein Solarpaneel oder wenigstens eine derartige Trageschiene. Die Trageschiene wird zweckmäßig an einer Halterung befestigt, die wiederum an der Tragestrebe des Trageteils befestigt ist. Bevorzugt ist es, die wenigstens eine Trageschiene an einer entlang der vorstehend beschriebenen Verstellschiene verschiebbaren Halterung anzubringen. Dies erlaubt es, bei der Verwendung mehrerer Trageschienen deren Abstand auf einfache Weise einzustellen. Besonders bevorzugt werden zwei parallel angeordnete Trageschienen verwendet, die an mehreren nebeneinander aufgestellten Dachaufständerungen befestigt sind. Dies erlaubt in einfacher und stabiler Weise das reihenweise Anbringen von Solarpaneelen.

Solarpaneele werden üblicherweise geneigt montiert, um die Sonneneinstrahlung zu erhöhen. Um die geneigte Installation zu vereinfachen, ist es bevorzugt, dass die Fußstützen unterschiedlich lang ausgebildet sind, wobei eine erste Fußstütze kürzer ausgebildet ist als eine zweite Fußstütze. Auf diese Weise ragen die beiden Fußstützen unterschiedlich weit durch die Dachauflast nach oben. Die längere Fußstütze gibt dabei diejenige Seite vor, an der das Solarpaneel weiter vom Dach entfernt montiert wird. Zusätzlich oder alternativ zur unterschiedlichen Länge der Fußstützen können auch die Tragestützen des Trageteils unterschiedlich lang ausgebildet sein, sodass der Trageteil insgesamt eine höhere und eine niedrigere Seite aufweist und ein am Trageteil montierter Gegenstand wie ein Solarpaneel oder eine Werbe- oder Informationstafel schräg zur Dachfläche geneigt liegt.

Aufgrund der Schräglagerung des Gegenstandes ergeben sich, insbesondere wenn es sich um einen flächigen Gegenstand wie ein Solarpaneel oder eine Werbe- oder Informationstafel oder Ähnliches handelt, unterschiedliche Angriffsflächen für Wind und damit unterschiedliche Krafteinwirkungen auf den Gegenstand und die diesen tragende Dachaufständerung. Insbesondere bei einem Windangriff gegen und unter die höherstehende Seite des flächigen Gegenstandes besteht die Gefahr, dass der Gegenstand hochgehoben und mit der Dachaufständerung über deren auf der niedrigeren Seite der Dachaufständerung, nachfolgend als vordere Kante bezeichnete, Kante der Fußplatte nach vorne gekippt wird. Die Erfindung wirkt dem durch eine asymmetrische Ausgestaltung der Fußplatte entgegen. Konkret ist der vordere Teil der Fußplatte, auf der niedrigeren Seite der Dachaufständerung, vor der ersten Fußstütze, kleiner als deren hinterer Teil, hinter der zweiten Fußstütze. Damit lastet auf dem hinteren Teil eine höhere Auflast, die ein Abheben der Dachaufständerung durch einen Windangriff von hinten verhindert. Bevorzugt ist die Fußstütze in ihrem vorderen Bereich also kürzer und/oder schmaler und im hinteren Bereich länger und/oder breiter, wobei der Übergang zwischen beiden Teilen - bei mehreren Fußstützen im Bereich zwischen den beiden oder den am weitesten voneinander entfernt liegenden Fußstützen - entweder kontinuierlich, stufenweise oder sprunghaft erfolgen kann. Bei der Verwendung unterschiedlich langer Fußstützen und/oder Tragestützen wird durch deren Anordnung angezeigt, in welcher Ausrichtung die Fußplatte verlegt wurde, da zweckmäßig die längere(n) der Stütze(n) benachbart zum hinteren, größeren Randbereich hin angeordnet ist (sind). Im Fall unterschiedlich langer Fußstützen kann daher auch bei von der Dachauflast verdeckter Fußplatte erkannt werden, wo sich der größere Randbereich der Fußplatte befindet, und sichergestellt werden, dass der Trageteil in der richtigen Ausrichtung auf dem Basisteil montiert wird, sodass die vorstehend beschriebene erhöhte Standsicherheit erreicht wird. Ergänzend oder alternativ kann auch eine Markierung an einer der Fußstützen und/oder Tragestützen vorgesehen sein, beispielsweise eine Einkerbung oder ähnliches, die die Ausrichtung der Fußplatte anzeigt.

Eine besonders bevorzugte Ausführungsform der Erfindung sieht vor, dass die Dachaufständerung auf der Fußplatte zwei Fußstützen aufweist, die auf der Fußplatte einen mittleren Bereich aufspannen. Der mittlere Bereich ist dabei derjenige Teil der Fußplatte, der zwischen den Fußstützen liegt, und zwar bis zu den außen liegenden Kanten der Fußstützen. An diesen mittleren Bereich grenzen beidseitige Randbereiche an, wobei ein an eine erste Fußstütze angrenzender erster Randbereich in Richtung vom mittleren Bereich nach außen eine geringere Länge aufweist als die Länge des zweiten Randbereichs, der an die zweite Fußstütze angrenzt. Bevorzugt ist der zweite Randbereich wenigstens doppelt so lang, besonders bevorzugt wenigstens dreimal so lang, ganz besonders bevorzugt wenigstens viermal so lang, wie der erste Randbereich. Es ergibt sich also eine Seite um den mittleren Bereich, an der die Kante der Fußplatte weiter vom mittleren Bereich entfernt ist als auf der anderen, insbesondere gegenüberliegenden Seite, wodurch die Kippstabilität erhöht wird. Besonders bevorzugt ist es, dass der erste Randbereich und der zweite Randbereich in derjenigen Richtung aufeinanderfolgend ausgebildet sind, in der der wenigstens eine auf dem Trageteil der Dachaufständerung befestigte Gegenstand die größte Windangriffsfläche aufweist. Beispielsweise verläuft diese Richtung vorteilhaft quer zu auf dem Trageteil angeordneten Trageschienen für Solarpaneele. Auf diese Weise wird eine erhöhte Standstabilität erreicht, auch wenn starker Wind auf die Solarpaneele trifft oder unter diese fährt. Besonders hilfreich ist die asymmetrische Fußplatte, wenn auch der Trageteil der Dachaufständerung asymmetrisch ausgebildet ist, beispielsweise, um den wenigstens einen Gegenstand schräg auf dem Trageteil zu befestigen. Es ist daher bevorzugt vorgesehen, dass die Dachaufständerung über der ersten Fußstütze vertikal niedriger ausgebildet ist als über der zweiten Fußstütze.

Die eingangs genannte Aufgabe wird ebenfalls gelöst durch ein Verfahren zur Installation eines Dachaufständerungssystems, wie vorstehend beschrieben, auf einer Dachfläche. Das erfindungsgemäße Verfahren umfasst die Schritte: Loses Aufstellen wenigstens eines Basisteils einer Dachaufständerung auf der Dachfläche oder auf einer auf der Dachfläche aufliegenden Schutzschicht, Auflegen des Dränageelementes und/oder der reißfesten Schicht auf die Dachfläche oder auf eine auf der Dachfläche aufliegende Schutzschicht und die Fußplatte des wenigstens einen Basisteils sowie Verbinden eines Trageteils der Dachaufständerung mit dem Basisteil. In einer bevorzugten Ausführungsform des Verfahrens ist vorgesehen, dass vor dem Auflegen ein Vorsehen wenigstens einer Durchgangsöffnung und/oder Einbuchtung in einem Dränageelement und/oder der reißfesten Schicht der Dachauflast erfolgt. Das erfindungsgemäße Auflegen erfolgt dann derart, dass wenigstens eine Fußstütze des Basisteils durch die wenigstens eine Durchgangsöffnung und/oder Einbuchtung hindurchdringt. Sämtliche für das Dachaufständerungssystem und die Dachaufständerung beschriebenen Merkmale, Wirkungen und Vorteile gelten ebenfalls im übertragenen Sinne für das Verfahren und umgekehrt. Es wird lediglich zur Vermeidung von Wiederholungen auf die jeweils anderen Erläuterungen Bezug genommen. Durch das erfindungsgemäße Verfahren gelingt eine besonders einfache und schnelle Installation des Dachaufständerungssystems, insbesondere ohne die Dachhaut verletzen zu müssen und ohne hierfür Abstriche bei der Standsicherheit machen zu müssen.

Die Erfindung wird nachstehend anhand der in den Figuren gezeigten Ausführungsbeispiele näher erläutert. Die Ausführungsbeispiele verdeutlichen lediglich einige bevorzugte Varianten der Erfindung, ohne dass die Erfindung auf diese Beispiele beschränkt wäre. Gleiche beziehungsweise gleich wirkende Bauteile sind in den Figuren mit den gleichen Bezugsziffern bezeichnet. Sich wiederholende Bauteile sind nicht in jeder Figur gesondert beziffert. Es zeigen schematisch:
- Figur 1:: einen Querschnitt durch ein Dachaufständerungssystem in verschiedenen Stadien der Montage;
- Figur 2:: einen Querschnitt gemäß Figur 1 in weiteren Montagestadien;
- Fig. 2a-2i:: verschiedene Detailansichten des Ausschnitts X der Dachauflast gemäß Figur 2;
- Figur 3:: Beispiele für Dränageelemente in perspektivischer und Detailansicht;
- Figur 4:: eine perspektivische Ansicht einer Dachaufständerung;
- Figur 5:: eine weitere perspektivische Ansicht einer Dachaufständerung;
- Figur 6:: mehrere Dachaufständerungen in perspektivischer Ansicht mit montierten Trageschienen;
- Figur 7:: die Dachaufständerungen gemäß Figur 6 mit montierten Solarpaneelen;
- Figur 8:: eine Dachaufständerung gemäß Figur 4 mit einer Verstellschiene und
- Figur 9:: ein Ablaufdiagramm des Verfahrens.

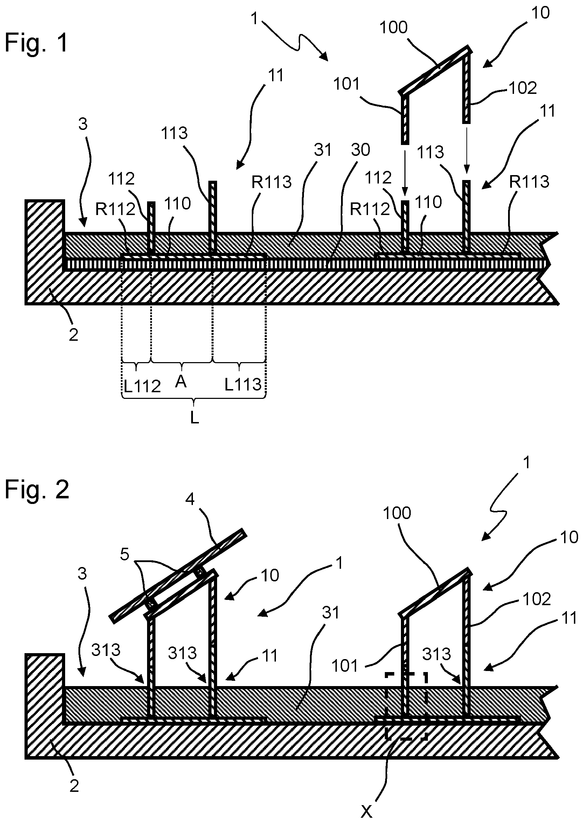

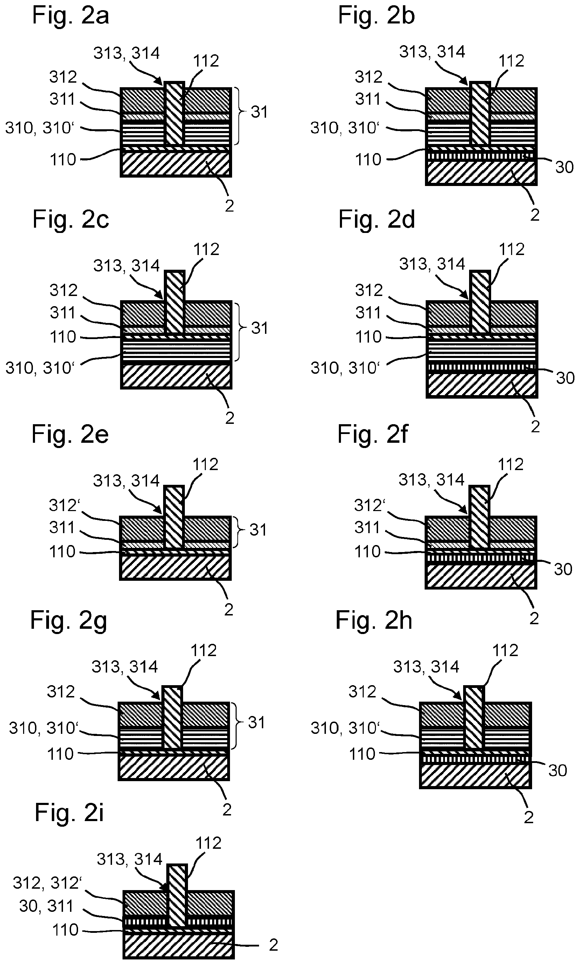

Die Figuren 1 und 2 zeigen ein Dachaufständerungssystem mit einer Dachaufständerung 1 in unterschiedlichen Montagestadien. Das Dachaufständerungssystem ist zur Montage auf einem Dach, insbesondere einer Dachfläche 2, die beispielsweise eine Betondecke oder eine sonstige Dachabdichtung ist, ausgelegt. Auf der Dachfläche 2 ist eine Dachauflast 3 angeordnet. Diese umfasst im Ausführungsbeispiel gemäß Figur 1 eine Schutzschicht 30, die beispielsweise aus einem Vliesmaterial besteht, und einen Dachbegrünungsaufbau 31. Bepflanzung ist nicht dargestellt und wird im Rahmen der Erfindung auch nicht als Teil der Dachauflast angesehen. Dies schließt natürlich nicht aus, dass der Dachbegrünungsaufbau bepflanzt wird. In Figur 2 ist ein Fall gezeigt, in dem keine Schutzschicht 30 vorgesehen und die Dachbegrünung 31 direkt auf die Dachfläche 2 aufgebracht ist. Jede Dachaufständerung 1 umfasst einen unteren Basisteil 11 und einen auf diesem befestigbaren oberen Trageteil 10. Der Basisteil 11 steht mit einer Fußplatte 110 entweder direkt auf der Dachfläche 2 (Figur 2) oder auf der Schutzschicht 30 auf der Dachfläche 2 auf (Figur 1). In jedem Fall liegt die Fußplatte 110 unter der Dachbegrünung 31. Von der Fußplatte 110 des Basisteils 11 ragen im gezeigten Ausführungsbeispiel zwei Fußstützen, konkret eine erste Fußstütze 112 und eine zweite Fußstütze 113, vertikal auf. Die Fußstützen 112, 113 sind, wie die Fußplatte 110, aus Aluminium oder Edelstahl und an diese angeschweißt. Jede der Fußstützen 112, 113 durchdringt von der Fußplatte 110 ausgehend die Dachauflast 3, konkret den Dachbegrünungsaufbau 31, vertikal nach oben und ragt aus dieser heraus.

Die in den Figuren 2a bis 2i gezeigten Detailansichten veranschaulichen verschiedene Varianten des Dachbegrünungsaufbaus 31. Die Detailansichten zeigen dabei den Aufbau an der Stelle des gestrichelten Kastens X gemäß Figur 2. Die beschriebenen Varianten treffen allerdings auf den Aufbau in Figur 1 ebenfalls zu. Der Dachbegrünungsaufbau 31 umfasst mehrere Schichten, die in verschiedener Zusammensetzung miteinander kombiniert werden können. Wichtig für die vorliegende Erfindung ist dabei, welche Teile des Dachbegrünungsaufbaus 31 über der Fußplatte 110 angeordnet sind und diese daher nach unten drücken, wodurch die Dachaufständerung 1 fixiert wird. Beispielsweise zeigt Figur 2a eine Variante, bei der direkt über der Dachfläche 2 eine Schicht 310' aus Dränageelementen 310 angeordnet ist, welche nachstehend noch näher beschrieben werden wird. Über der Dränageschicht 310' ist eine Filterschicht 311 angeordnet, die beispielsweise aus einem Vliesmaterial besteht und eine reißfeste Schicht im Sinne der Erfindung sein kann. Die Filterschicht 311 ist wasserdurchlässig, aber verhindert, dass Schüttgut, welches lose auf die Filterschicht 311 aufgebracht ist, in die Dränageschicht 310' gelangen kann. Das Schüttgut ist hier als eine Schicht Pflanzsubstrat 312 gezeigt.

Figur 2b zeigt denselben Dachbegrünungsaufbau 31 gemäß Figur 2a, allerdings ist unmittelbar auf der Dachfläche 2 zuerst eine Schutzschicht 30 angeordnet, die beispielsweise ebenfalls ein Vliesmaterial umfasst. Die Schutzschicht 30 ist ebenfalls unter der Fußplatte 110 der Dachaufständerung 1 angeordnet und bildet die unterste Schicht der Dachauflast 3.

Figur 2c zeigt eine alternative Ausführungsform, bei der die Dränageschicht 310' über die gesamte Dachfläche 2 hinweg unmittelbar auf dieser aufliegt und die Fußplatte 110 der Dachaufständerung 1 auf die Dränageschicht 310' gestellt ist. Bei dieser Variante sind nur die reißfeste Schicht 311 und das Pflanzsubstrat 312 auf der Fußplatte 110 angeordnet und tragen zu deren Fixierung bei.

Figur 2d zeigt denselben Aufbau wie Figur 2c mit einer zusätzlichen Schutzschicht 30 als unterste Schicht.

In Figur 2e ist eine Variante gezeigt, die ohne Dränageschicht 310' ausgebildet ist. Die Fußplatte 110 wird direkt auf die Dachfläche 2 gestellt. Auf die Fußplatte 110 werden dann, wie bereits in der Variante gemäß Figur 2c, die reißfeste Schicht 311 und eine Schicht aus Schüttgut, hier eine Kiesschicht 312', aufgebracht, die die Dachaufständerung 1 auf der Dachfläche 2 fixieren.

Figur 2f zeigt wieder das Ausführungsbeispiel gemäß Figur 2e mit einer zusätzlichen Schutzschicht 30 als unterste Schicht.

Die Variante gemäß Figur 2g wiederum kommt ohne reißfeste Schicht 311 aus. Die Fußplatte 110 wird unmittelbar auf die Dachfläche 2 gestellt. Auf der Fußplatte 110 werden sodann eine Dränageschicht 310' und Pflanzsubstrat 312 aufgebracht. In diesem Fall wird das Schüttgut direkt auf die Dränageelemente 310 aufgebracht und dringt dabei auch in freiliegende Hohlräume ein.

Figur 2h wiederum zeigt die Variante gemäß Figur 2g mit zusätzlicher Schutzschicht 30 als unterste Schicht.

In Figur 2i ist die Fußplatte 110 unmittelbar auf der Dachfläche 2 aufgestellt. Die Schutzschicht 30 ist hier gleichzeitig die reißfeste Schicht 311 im Sinne der Erfindung. Auf dieser sind dann die weiteren Schichten der Dachauflast aufgebracht, hier in der einfachsten Variante lediglich eine Schicht Schüttgut, konkret eine Schicht Pflanzsubstrat 312 oder Kies 312'.

Sämtlichen Ausführungsbeispielen ist gemeinsam, dass zumindest entweder die Dränageschicht 310' oder die reißfeste Schicht 311 oder beide, zusammen mit der Schüttgutschicht, konkret Pflanzsubstrat 312 oder Kies 312', über der Fußplatte 110 der Dachaufständerung 1 angeordnet sind und zu deren Fixation beitragen.

In den meisten gezeigten Ausführungsbeispielen der Dachbegrünung 31 ist das Schüttgut eine Schicht Pflanzsubstrat 312. Statt des Pflanzsubstrats 312 könnte hier ebenfalls zumindest bereichsweise eine Kiesschüttung angeordnet sein, beispielsweise für begehbare Bereiche. Eine Auftragung von Kies auf der gesamten Dachfläche ist ebenfalls möglich und würde zu einem sogenannten Kiesdach anstelle eines Gründaches führen. Um das Durchstecken der Fußstützen 112, 113 zu ermöglichen, ist in den großflächig zusammenhängenden Schichten der Dachbegrünung 31, also der Dränageschicht 310' und/oder der reißfesten Schicht 311, pro Fußstütze 112, 113 jeweils eine Durchgangsöffnung 313 oder eine Einbuchtung 314 angeordnet. Durch diese Durchgangsöffnungen 313 oder Einbuchtungen 314 erstrecken sich die Fußstützen 112, 113 vertikal nach oben durch den Dachbegrünungsaufbau 31 hindurch und bis aus diesem heraus. Sie stehen also vertikal über die Dachauflast 3 und somit über den Dachbegrünungsaufbau 31 vor und sind daher von oben aus zugänglich. Die erste Fußstütze 112 ist kürzer als die zweite 113.

Wie in den Figuren 1 und 2 jeweils auf der rechten Seite angedeutet, werden die über die Dachauflast 3 nach oben vorstehenden Fußstützen 112, 113 zur Befestigung des Trageteils 10 der Dachaufständerung 1 genutzt. Dabei ist es grundsätzlich möglich und tatsächlich in der Praxis bevorzugt, die Trageteile 10 bereits vor Aufbringung der Dachauflast 3, konkret des Dachbegrünungsaufbaus 31, an die Basisteile zu montieren. Die Dachauflast wurde in Figur 1 bereits eingezeichnet, um die Länge der Fußstützen in Bezug auf die Höhe des Dachbegrünungsaufbaus zu verdeutlichen und darzustellen, dass die Fußstützen über die Dachauflast vorstehen. Der Trageteil 10 umfasst eine erste Tragestütze 101 und eine zweite Tragestütze 102, die von einer Tragestrebe 100 verbunden sind. Das Material des Trageteils 10 ist ebenfalls bevorzugt Metall, beispielsweise Aluminium oder Edelstahl. Die Tragestützen 101, 102 und die Tragestrebe 100 sind bevorzugt miteinander verschweißt. Wie in der rechten Seite der Figur 1 erkennbar, verlaufen Stützen und Strebe des Trageteils entlang dreier Seiten eines Parallelogramms. Über die Tragestützen 101, 102 ist der Trageteil 10 mit dem Basisteil 11, konkret den Fußstützen 112, 113, verbindbar. Dafür werden die unteren Enden der Tragstützen 101, 102 in die oberen Enden der Fußstützen 112, 113 eingeschoben und dort befestigt. Die Tragestrebe 100 ist am oberen Ende des Trageteils 10 angeordnet und dafür ausgebildet, wenigstens einen weiteren Gegenstand zu befestigen. Dies ist beispielhaft auf der linken Seite in Figur 2 gezeigt. Hier sind an der Tragestrebe 100 zwei Trageschienen 5 befestigt, die senkrecht zur Zeichenebene verlaufen. Ein anderes Ende der jeweiligen Tragschiene ist an einer in der Zeichnung nicht sichtbaren weiteren Dachaufständerung befestigt. Die Trageschienen 5 wiederum sind dazu ausgebildet, wenigstens ein Solarpaneel 4 an ihnen zu befestigen. Das Solarpaneel ist aufgrund der pultartigen Höhenstruktur der Trageteile schräg zur Dachfläche geneigt und kann so in an sich bekannter Weise günstig zur Sonne ausgerichtet werden.

Insgesamt sind die Dachaufständerungen 1 des Dachaufständerungssystems weder an der Dachfläche 2 noch an der Dachauflast 3 befestigt. Die Dachaufständerungen 1 sind mit ihren Basisteilen 11 lediglich auf die Dachfläche 2 beziehungsweise auf eine dort aufgebrachte Schutzschicht 30 gestellt. Dann wird die (weitere) Dachauflast 3, hier meist ein Dachbegrünungsaufbau 31, derart über die Basisteile 11 gelegt, dass die Fußstützen 112, 113 die in den zusammenhängenden Schichten der Dachauflast 3 vorgesehenen Durchgangsöffnungen 313 durchdringen und durch diese hindurch vertikal vorstehen. An den vorstehenden Fußstützen 112, 113 kann dann der Trageteil 10 mit seinen Tragestützen 101, 102 befestigt werden. Die Dachaufständerungen und daran befestigte Gegenstände 4, 5 werden somit allein durch die Auflast auf den Fußplatten 110 gehalten. Bei der Installation dieses Dachaufständerungssystems wird die Dachhaut der Dachfläche 2 nicht verletzt, da keine Befestigungsmittel mit der Dachfläche 2 verbunden werden müssen. Es besteht daher kein Risiko, dass das Dach undicht wird oder Wärmebrücken entstehen. Darüber hinaus ist die Installation besonders einfach, da auch keine Befestigungsmittelverbindungen zwischen den Dachaufständerungen 1 und der Dachauflast 3 hergestellt werden müssen. Die Dachaufständerungen 1 sind vielmehr durch die Gewichtskraft der Dachauflast 3 und die seitliche Sicherung in den Durchgangsöffnungen 313 und/oder Einbuchtungen 314 der Dachauflast 3 sowohl gegen ein Verkippen als auch ein Verschieben gesichert und bieten daher verlässlichen Halt.

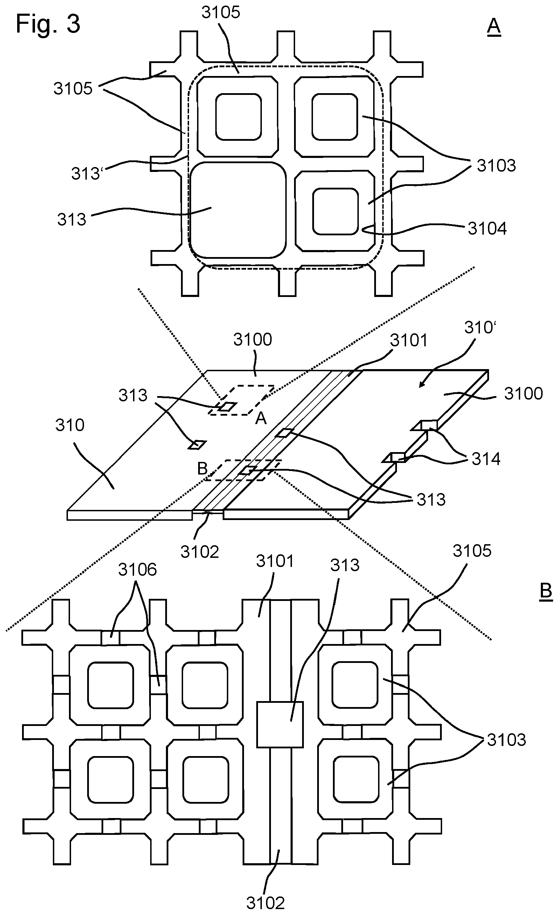

Figur 3 zeigt beispielhaft und ausschnittsweise mögliche Ausführungsformen einer aus mehreren Dränageelementen 310 aufgebauten Dränageschicht 310'. Weitere Teile der Dachauflast 3 sind aus Übersichtlichkeitsgründen nicht dargestellt. Wie in der Mitte der Figur 3 gezeigt, besteht die Dränageschicht 310' beispielsweise aus mehreren nebeneinander angeordneten und plattenförmigen Dränageelementen 310, von denen eines hier exemplarisch gezeigt ist. Das Dränageelement 310 besteht aus zwei Hälften 3100, die über einen Stegbereich 3101 miteinander verbunden sind. Der Stegbereich 3101 weist über seine gesamte Länge in seiner Mitte einen verdünnten Bereich 3102 auf, der als Scharnier wirkt und über den die beiden Hälften 3100 aufeinander geklappt werden können. Dadurch ist das Dränageelement 310 beim Transport weniger sperrig. Bei dem Dränageelement 310 handelt es sich um eine Noppenplatte oder ein Wasser-Retentionselement mit napfartigen Vertiefungen. Der Unterschied zwischen beiden Varianten besteht im Wesentlichen darin, dass die Noppen im Vergleich zu den napfartigen Vertiefungen deutlich kleiner sind. Die Dränageelemente 310 werden so auf der Dachfläche oder einer darauf angeordneten Schutzschicht ausgelegt, dass die Öffnungen der Noppen oder napfartigen Vertiefungen 3103 von der Dachfläche weg nach oben zeigen und Wasser aufnehmen können. Die Dränageelemente 310, welche die Dränageschicht 310' bilden, sind untereinander in an sich bekannter Weise verbunden.

Figur 3 zeigt unterschiedliche Varianten der Anordnung von Durchgangsöffnungen 313 und Einbuchtungen 314 in dem Dränageelement 310. Die Durchgangsöffnungen 313 und Einbuchtungen 314 sind jeweils paarweise zur Aufnahme eines Paars von Fußstützen 112, 113 eines Basisteils 11 angeordnet, entsprechend Figuren 1 und 2. Beispielsweise ist ein paar von Einbuchtungen 314 in der mittleren perspektivischen Darstellung der Figur 3 gezeigt. Diese befinden sich an einer Seite des Dränageelementes 310 und sind groß genug ausgebildet, jeweils eine Fußstütze 112, 113 aufzunehmen. Wird an der Seite des Dränageelementes 310 mit den Einbuchtungen 314 ein weiteres Dränageelement 310 angegliedert, so sind die in den Einbuchtungen 314 aufgenommenen Fußstützen 112, 113 in der Horizontalebene auf allen Seiten von einem Dränageelement 110 umgeben und daher gesichert. Von beiden Varianten der Durchgangsöffnungen 313 ist jeweils eine in einer Ausschnittvergrößerung gezeigt - die erste Variante in Vergrößerung A im Figurenblatt oben, die zweite in Vergrößerung B im Figurenblatt unten. Beide Vergrößerungen A und B zeigen eine Draufsicht auf den jeweils in der Gesamtdarstellung in der Mitte des Figurenblatts gestrichelt markierten Bereich.

Ausschnittvergrößerung A zeigt einen Teil einer Noppenplatte oder Wasser-Retentionsbox mit Vertiefungen 3103, die an ihrem oberen Rand 3104 von Stegbereichen 3105 umgeben und miteinander verbunden sind. Das Dränageelement 310 besteht aus Kunststoff und ist in der Regel einstückig durch Prägen, Tiefziehen oder Spritzguss hergestellt. Je nachdem, ob es sich bei den Vertiefungen 3103 um kleinere Noppen oder größere napfartige Vertiefungen handelt, umfasst die Durchgangsöffnung eine unterschiedliche Anzahl an Vertiefungen. Bei größeren napfartigen Vertiefungen kann es ausreichen, wenn die Durchgangsöffnung nur eine Vertiefung durchdringt. Ein solches Beispiel ist im linken unteren Bereich gezeigt, wo die Durchgangsöffnung 313 durch eine Vertiefung 3103 hindurchgeht. Der Rand der Durchgangsöffnung liegt dabei auf den die Vertiefung umgebenden Stegbereichen 3105. Dies hat den Vorteil, dass die Durchgangsöffnung im Dränageelement 310 oben, entfernt von der Dachfläche angeordnet ist, wodurch ein unbeabsichtigtes Abfließen von gesammeltem Wasser verhindert wird. Außerdem wird lediglich eine Vertiefung verbraucht, während die übrigen Vertiefungen 3103 als Wasserspeicher erhalten bleiben. Diese Anordnung ist aber nicht zwingend. Die Ausschnittvergrößerung A zeigt eine weitere Variante mit der gestrichelt eingezeichneten Durchgangsöffnung 313', die mehrere Vertiefungen 3103 umfasst und einige dabei außerhalb der Stegbereiche 3105 anschneidet. Diese Variante kommt hauptsächlich in Betracht, wenn es sich bei dem Dränageelement 310 um eine Noppenplatte mit relativ kleinen Vertiefungen handelt. Auch wenn hier beide Varianten gemeinsam dargestellt sind, sind in der zweiten Variante die Vertiefungen 3103 tatsächlich kleiner als im ersten Fall, während die Durchgangsöffnungen 313 und 313' gleich groß sind, wenn sie zur Aufnahme der gleichen Fußstützen bestimmt sind.

Ausschnittvergrößerung B zeigt einen Bereich des Dränageelements 310 im Bereich des Scharnier-Stegbereichs 3101. Die Durchgangsöffnung 313 ist - genau wie die zweite und hier nicht dargestellte Durchgangsöffnung - vollständig innerhalb des Stegbereichs 3101 angeordnet. Sie nimmt daher keinen Platz auf dem mit napfartigen Vertiefungen 3103 versehenen Bereich ein und reduziert so das Speichervolumen nicht. Sie liegt zudem auf Höhe der Öffnungen der napfartigen Vertiefungen und der diese umgebenden Stegbereiche 3105, sodass der Durchgangsöffnung 313 kein Wasser aus den Vertiefungen 3103 zufließen kann. Dagegen ist - anders als im Beispiel der Vergrößerung A ― ein Wasserfluss zwischen den Vertiefungen 3103 möglich, da sie durch Überlaufrinnen 3106 miteinander verbunden sind, welche die Stegbereiche 3105 queren und in diese eingetieft sind. Dies ermöglicht das Abführen von Überschusswasser, das in den Vertiefungen 3103 nicht mehr aufgenommen werden kann, in Richtung auf einen Dachabfluss. Der unterhalb der Überlaufrinnen 3106 liegende Bereich der Vertiefungen 3103 bildet einen Dauerspeicher, und das dort verbleibende Wasser dient der Versorgung der Bepflanzung der Dachbegrünung.

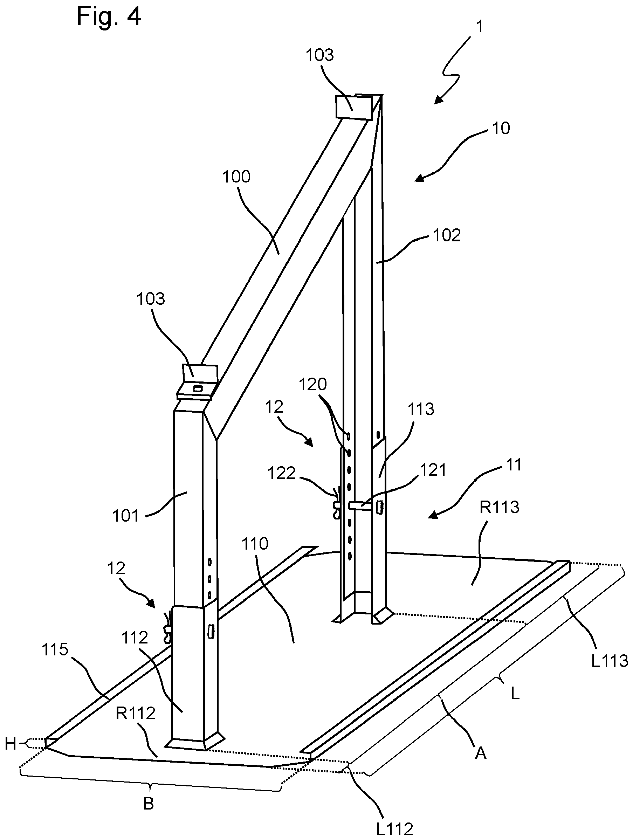

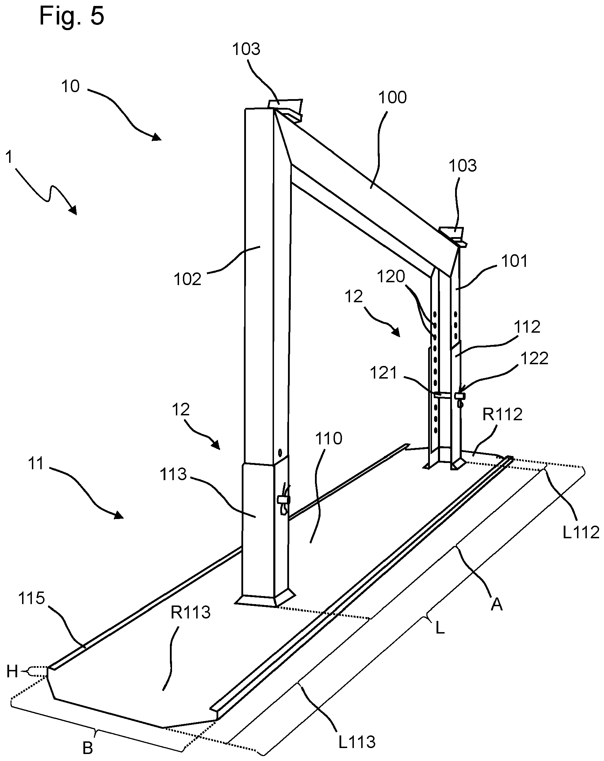

Die Figuren 4 und 5 zeigen erfindungsgemäße Dachaufständerungen 1 in perspektivischer Ansicht aus zwei unterschiedlichen Blickrichtungen. Die Dachaufständerung 1 mit Trageteil 10 und Basisteil 11 besteht aus Aluminium oder Edelstahl. Der Basisteil 11 weist eine flache Fußplatte 110 auf, deren Länge L und/oder Breite B um ein Vielfaches größer ist als ihre Höhe H. Darüber hinaus ist die Länge L ebenfalls um ein Vielfaches größer als die Breite B, sodass die Fußplatte 110 insgesamt länglich und flächig und insbesondere im Wesentlichen rechteckig ist. An den beiden langen Rändern der Fußplatte 110 ist diese U-förmig umgebogen. Die dadurch entstehenden Umschläge 115 sorgen für eine erhöhte Steifigkeit der Fußplatte 110. Auf die Fußplatte 110 sind zwei Fußstützen 112, 113 geschweißt, die sich senkrecht zur flächigen Ausdehnung der Fußplatte 110 erstrecken.

Die Fußstützen 112, 113 sind, genauso wie die Tragestützen 101, 102 und die Tragestrebe 100 des Trageteils 10, als U-Profile ausgebildet. Die Tragestützen 101, 102 des Trageteils 10 sind mit einem geringeren Durchmesser als die Fußstützen 112, 113 des Basisteils 11 ausgebildet und können daher in die Fußstützen 112, 113 eingesteckt werden. Darüber hinaus sind die Tragestützen 101, 102 über jeweils eine Befestigungseinrichtung 12 mit den Fußstützen 112, 113 verbunden. Hierfür sind im gezeigten Ausführungsbeispiel in den Tragestützen 101, 102 eine Vielzahl von Durchgangsbohrungen 120 vorgesehen, die sich jeweils mit einer Durchgangsbohrung 120 in den Fußstützen zur Deckung bringen lässt. Umgekehrt könnte die Vielzahl von Durchgangsbohrungen 120 allerdings auch an den Fußstützen 112, 113 vorgesehen sein, während die Tragstützen eine oder mehrere Durchgangsbohrungen aufweisen. Die Durchgangsbohrungen 120 der Tragestützen 101, 102 lassen sich mit der jeweiligen Durchgangsbohrung 120 in den Fußstützen 112, 113 in Deckung bringen, sodass ein Bolzen 121 durch die Durchgangsbohrungen 120 gesteckt werden kann und so den Trageteil 10 am Basisteil 12 befestigt. Zur Sicherung kann ebenfalls ein Sicherungssplint 122 vorgesehen sein, der bevorzugt verliersicher am Bolzen befestigt ist. Durch die Auswahl der Durchgangsbohrungen 120 an den Tragestützen 101, 102, die für die Befestigung genutzt werden, können verschiedene Höhenpositionen des Trageteils 10 und dadurch unterschiedliche Gesamthöhen der Dachaufständerung 1 gewählt werden.

Der Trageteil 10, konkret die Tragestrebe 100, ist mit zwei Halterungen 103 ausgestattet. Über diese Halterungen 103 können weitere Gegenstände, wie beispielsweise die Trageschienen 5 und das Solarpaneel 4, am Trageteil 10 befestigt werden. Das gezeigte Ausführungsbeispiel ist für die Nutzung mit Solarpaneelen 4 ausgelegt. Hierfür ist insbesondere die Tragestrebe 100 derart schräg angeordnet, dass eine der Halterungen 103 vertikal weiter oben - weiter von der Fußplatte 110 entfernt - angeordnet ist als die andere Halterung 103. Auf diese Weise können später auch die Solarpaneele 4 schräg an den von den Halterungen 3 gehaltenen Trageschienen 5 montiert werden.

Insgesamt ist die Gesamthöhe der Dachaufständerung 1 im gezeigten Ausführungsbeispiel über der zweiten Fußstütze 113 und der zweiten Tragestütze 102 größer als über der ersten Fußstütze 112 und der ersten Tragestütze 101. Insbesondere durch die schräge Anordnung der Solarpaneele 4 sind diese besonders anfällig gegenüber Wind und führen aufgrund ihrer Ausrichtung zu besonders starken Kippkräften, wobei die Gefahr, dass die Fußplatte 110 auf der Seite der zweiten Fußstütze 113 hochgehoben wird, besonders groß ist. Um diesem Effekt entgegenzuwirken, ist die Fußplatte 110 bezüglich der Anbringung der Fußstützen 112, 113 asymmetrisch ausgebildet. Entsprechend weist die Fußplatte 110 entlang ihrer Länge L einen mittleren Bereich A auf, der von den Fußstützen 112, 113 aufgespannt wird. Der mittlere Bereich A geht bis zu den äußeren Enden der Fußstützen 112, 113. An die Fußstützen 112, 113 schließen sich dann entlang der Länge L der Fußplatte 110 zwei Randbereiche an, konkret ein erster Randbereich R112 im Bereich der ersten Fußstütze 112 und ein zweiter Randbereich R113 im Bereich der zweiten Fußstütze 113. Der zweite Randbereich R113 liegt daher an demjenigen Ende der Fußplatte 110, an dem die Dachaufständerung 1 die größere Gesamthöhe erreicht, und ist breiter ausgebildet, insbesondere um ein Vielfaches breiter, als der Randbereich R112. Mit anderen Worten ist die Länge L113 des zweiten Randbereiches R113 entlang der Länge L der Fußplatte 110 größer, insbesondere um ein Vielfaches größer, als die Länge L112 des ersten Randbereiches R112 entlang der Länge L der Fußplatte 110. Durch die entsprechende Verlängerung des Randbereiches R113 wird einem Abheben der Fußplatte in diesem Bereich wirksam entgegengewirkt, da hierfür eine vergrößerte Gewichtskraft der Dachauflast 3 überwunden werden müsste. Die asymmetrische Anordnung der Fußstützen 112, 113 trägt daher wesentlich zur Standsicherheit der Dachaufständerung 1 und des Dachaufständerungssystems bei.

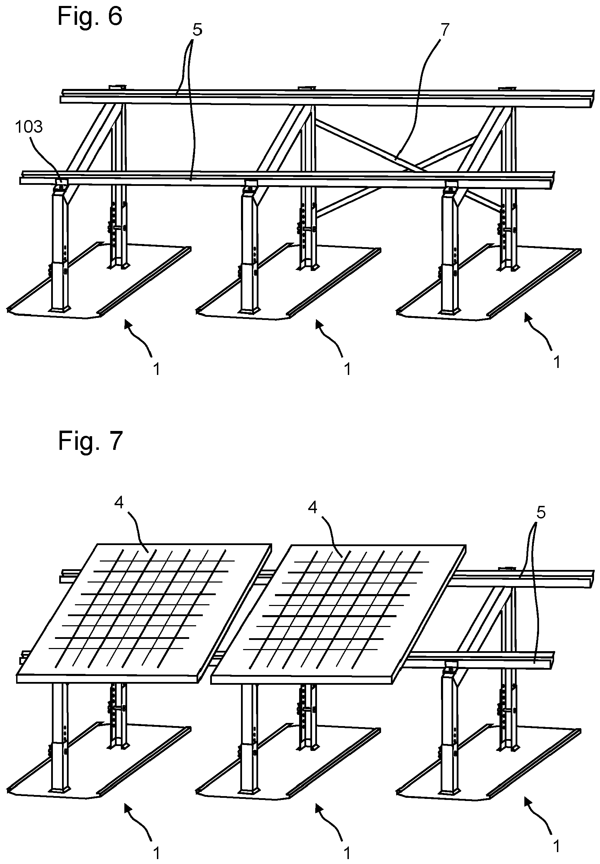

In den Figuren 6 und 7 ist dargestellt, wie mehrere Dachaufständerungen 1 oberhalb der Dachauflast 3, insbesondere über die Trageteile 10, miteinander verbunden werden können. Beispielsweise können die Dachaufständerungen 1, wie in Figur 6 gezeigt, über einen Windverband 7 verbunden werden, der, wie im Stand der Technik bekannt, aus überkreuzten Metallstreben besteht und über die Befestigung der Dachaufständerungen 1 aneinander ein seitliches Verkippen verhindert. Darüber hinaus können die Dachaufständerungen 1 auch über von ihnen getragene Gegenstände verbunden werden. Im gezeigten Ausführungsbeispiel tragen die Dachaufständerungen 1 jeweils zwei Trageschienen 5, wobei die Trageschienen 5 jeweils mehrere Dachaufständerungen 1 überspannen und mit diesen verbunden sind, nämlich über die Halterungen 103. Über die Trageschienen 5 stehen die Dachaufständerungen 1 ebenfalls miteinander in Verbindung und sind gegen ein seitliches Verkippen abgesichert.

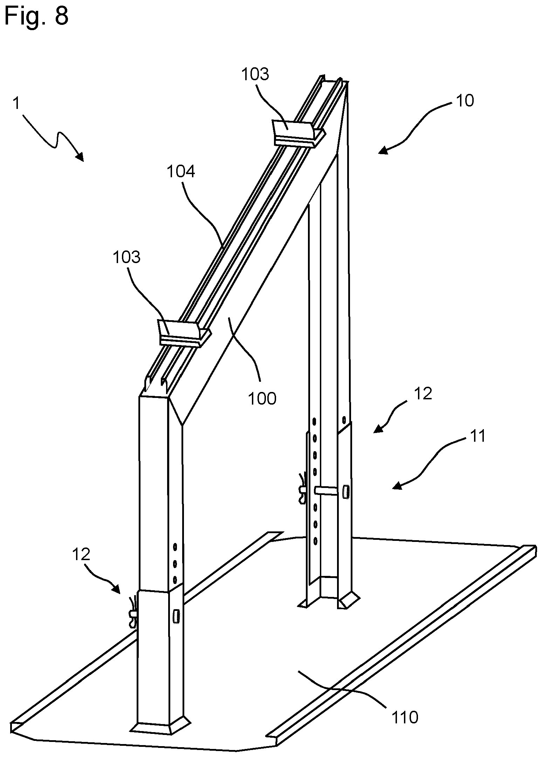

In Figur 7 ist weiter dargestellt, dass die Trageschienen 5 mehrere Solarpaneele 4 nebeneinander aufnehmen können. Die Solarpaneele 4 sind nebeneinander an den Trageschienen 5 montiert. Dies setzt voraus, dass der Typ der Solarpaneele 4 im Vorhinein bekannt ist, so dass die Halterungen 103 im korrekten Abstand auf der Tragestrebe 100 angeordnet werden können, wodurch wiederum die Trageschienen 5 den richtigen Abstand zur Montage der Solarpaneele 4 aufweisen. Um dies zu vereinfachen und die Flexibilität der Dachaufständerung 1 zu erhöhen, ist in der Ausführungsform gemäß Figur 8 auf der Tragestrebe 100 eine Verstellschiene 104 angeordnet. Die Verstellschiene 104 trägt wenigstens eine der Halterungen 103, im gezeigten Ausführungsbeispiel beide Halterungen 103. Die Halterungen 103 wiederum sind derart an der Verstellschiene 104 gelagert, dass sie entlang der Verstellschiene 104 bewegbar und an verschiedenen Positionen entlang der Verstellschiene 104 feststellbar sind. Beispielsweise weisen die Halterungen 103 eine Schraubklemmverbindung auf, mit der sie an einer beliebigen Position entlang der Verstellschiene 104 fixiert werden können. Auf diese Weise können dieselben Dachaufständerungen 1 für unterschiedliche Solarpaneele 4 eingesetzt werden. Selbst nach der kompletten Installation der Dachaufständerung 1 beziehungsweise des Dachaufständerungssystems kann die Position der Halterungen 103 und damit ebenfalls der Trageschienen 5 an das jeweils verwendete Modell der Solarpaneele 4 oder an die Abmessungen sonstiger Gegenstände angepasst werden. Dies bedeutet gleichzeitig, dass keine unterschiedlichen Modelle der Dachaufständerungen 1 produziert werden müssen, was die Herstellungskosten deutlich reduziert.

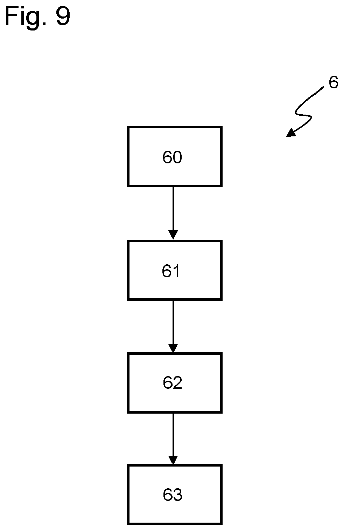

Figur 9 zeigt ein Ablaufdiagramm des Verfahrens 6 zur Installation eines Dachaufständerungssystems. Das Verfahren 6 beginnt mit dem Schritt 60 des losen Aufstellens wenigstens eines Basisteils 11 einer Dachaufständerung 1 auf der Dachfläche 2 oder auf einer auf der Dachfläche 2 aufliegenden Schutzschicht 30. Wie bereits beschrieben, wird insbesondere keine Befestigung des Basisteils 11 oder der Dachaufständerung 1 vorgenommen, weder an der Dachfläche 2 noch an der Schutzschicht 30 oder den später hinzugefügten weiteren Schichten der Dachauflast 3. Als nächstes erfolgt in Schritt 61 optional das Vorsehen wenigstens einer Durchgangsöffnung 313 oder Einbuchtung 314 in einem Dränageelement 310 und/oder einer reißfesten Schicht 311 einer Dachauflast 3. Insbesondere wird je eine Durchgangsöffnung 313 oder Einbuchtung 314 pro Fußstütze 112, 113 vorgesehen. Darüber hinaus werden entsprechende Durchgangsöffnungen 313 oder Einbuchtungen 314 in jeder über der Fußplatte 110 liegenden zusammenhängenden Schicht der Dachauflast 3 vorgesehen. Es folgt mit Schritt 62 das Auflegen eines Dränageelements 310 und/oder einer reißfesten Schicht 311 auf die Dachfläche 2 oder auf eine auf der Dachfläche 2 aufliegende Schutzschicht 30 und die Fußplatte 110 des wenigstens einen Basisteils 11 derart, dass Fußstützen 112, 113 durch die wenigstens eine Durchgangsöffnung 313 oder Einbuchtung 314 hindurchdringt. Falls keine Durchgangsöffnungen 313 oder Einbuchtungen 314 genutzt werden, werden die Fußstützen 112, 113 einfach zwischen zwei nebeneinander liegenden Teilen der Dränageschicht 310' und/oder der reißfesten Schicht 311 angeordnet und auf diese Weise nach oben durch diese Schichten hindurch geführt. In diesem Fall und gegebenenfalls auch im Fall der Verwendung von Durchgangsöffnungen 313 oder Einbuchtungen 314 werden weitere Dränageelemente 310 zu einer Dränageschicht 310' verbunden. Im Anschluss werden sukzessive optionale weitere Schichten übereinander angeordnet und, wenn es sich um flächige, zusammenhängende Schichten handelt, ebenfalls mit Durchgangsöffnungen 313 oder Einbuchtungen 314 versehen, durch welche die Fußstützen 112, 113 hindurchgeführt wird. Schließlich erfolgt in Schritt 63 ein Verbinden eines Trageteils 10 der Dachaufständerung 1 mit dem Basisteil 11, beispielsweise über die vorstehend beschriebene Befestigungseinrichtung 12. Vor oder bevorzugt nach dem Verbinden der Basis- und Tragteile kann eine Schicht Schüttgut auf die zu der Zeit oberste Schicht des Schichtaufbaus, zum Beispiel auf die reißfeste Schicht 311 oder die Dränageschicht 310', aufgebracht werden. Das Schüttgut ist beispielsweise ein Pflanzsubstrat 312 und/oder Kies 312'. Das Dachaufständerungssystem ist dann ausreichend stabil, um zu tragende Gegenstände, beispielsweise Trageschienen 5 und/oder Solarpaneele 4 an den Trageteilen 10 der Dachaufständerungen 1 zu befestigen.

## Patentansprüche

1. Dachaufständerungssystem für eine Dachfläche (2), umfassend wenigstens eine Dachaufständerung (1) und eine Dachauflast (3), wobei
die Dachauflast (3) wenigstens ein Dränageelement (310) und/oder wenigstens eine reißfeste Schicht (311) umfasst und
die Dachaufständerung (1) einen Basisteil (11) sowie einen Trageteil (10) aufweist,
wobei der Basisteil (11) eine Fußplatte (110) und zwei von der Fußplatte (110) ausgehende Fußstützen (112, 113) aufweist und
wobei der Trageteil (10) mit dem Basisteil (11) über die Fußstützen (112, 113) verbindbar und weiterhin zum Befestigen wenigstens eines Gegenstandes (4, 5) ausgebildet ist,
**dadurch gekennzeichnet,**
**dass** die Fußplatte (110) zur Verankerung der Dachaufständerung (1) unter dem Dränageelement (310) und/oder der reißfesten Schicht (311) angeordnet ist.

2. Dachaufständerungssystem gemäß Anspruch 1,
**dadurch gekennzeichnet,**
**dass** das Dränageelement (310) und/oder die reißfeste Schicht (311) wenigstens eine Durchgangsöffnung (313) und/oder eine Einbuchtung (314) aufweist, durch die wenigstens eine Fußstütze (112, 113) hindurchgeführt ist und in Richtung von der Dachfläche (2) weg verläuft.

3. Dachaufständerungssystem gemäß einem der vorhergehenden Ansprüche,
**dadurch gekennzeichnet,**
**dass** die Dachaufständerung (1) keine Befestigungsmittel zur Verbindung mit Teilen der Dachauflast (3) und insbesondere dem wenigstens einen Dränageelement (310) und/oder der reißfesten Schicht (311) und/oder zur Verbindung mit der Dachfläche (2) aufweist und nicht mit diesen fest verbunden ist.

4. Dachaufständerungssystem gemäß einem der vorhergehenden Ansprüche,
**dadurch gekennzeichnet, dass** das wenigstens eine Dränageelement (310) wenigstens eines der folgenden Merkmale aufweist:
- es weist jeweils eine Durchgangsöffnung (313) pro Fußstütze (112, 113) auf,
- es weist jeweils eine Einbuchtung (314) pro Fußstütze (112, 113) auf, wobei die wenigstens eine Einbuchtung (314) ausschließlich an einer Seite des Dränageelements (310) Einbuchtungen (314) vorgesehen ist oder wobei das Dränageelement (310) Einbuchtungen (314) auf gegenüberliegenden Seiten aufweist,
- es ist als eine wenigstens einen Hohlraum definierende wasserdurchlässige Stützstruktur und insbesondere als Wasser-Retentionsbox ausgebildet,
- es umfasst ein Dauerspeichervolumen für Wasser,
- es umfasst eine Vielzahl rasterartig angeordneter napfförmiger Vertiefungen (3103), die durch Stegbereiche (3101, 3105) miteinander verbunden sind, wobei der Rand der wenigstens einen Durchgangsöffnung (313) bevorzugt im Bereich der Stegbereiche (3101, 3105) liegt.

5. Dachaufständerungssystem gemäß einem der vorhergehenden Ansprüche,
**dadurch gekennzeichnet, dass** die Dachauflast (3) wenigstens eines der folgenden Merkmale aufweist:
- sie weist mehrere aneinander angrenzende und optional miteinander verbundener Dränageelemente (310) auf,
- das wenigstens eine Dränageelement (310) oder die reißfeste Schicht (311) liegt unmittelbar auf der Dachfläche (2) auf oder
- zwischen Dachfläche (2) und dem wenigstens einen Dränageelement (310) und/oder der reißfesten Schicht (311) ist eine Schutzschicht (30), insbesondere ein Vliesmaterial, vorhanden, wobei die Fußplatte (110) bevorzugt zwischen der Schutzschicht (30) und dem wenigstens einen Dränageelement (310) und/oder der reißfesten Schicht (311) angeordnet ist,
- auf der von der Dachfläche (2) abgewandten Oberseite des wenigstens einen Dränageelements (310) ist eine Filterschicht (311) vorhanden, wobei die Filterschicht (311) bevorzugt jeweils eine Durchgangsöffnung (313) pro Fußstütze (112, 113) aufweist, wobei die Filterschicht besonders bevorzugt identisch ist mit der reißfesten Schicht (311),
- die reißfeste Schicht (311) und/oder die Filterschicht (311) besteht aus einem Vliesmaterial, einer Gitter- oder Gewebeschicht,
- die reißfeste Schicht (311) oder die Filterschicht (311) ist unmittelbar auf der von der Dachfläche (2) abgewandten Oberseite des wenigstens einen Dränageelements (310) angeordnet,
- oberhalb des wenigstens einen Dränageelements (310) und gegebenenfalls der Filterschicht (311) und/oder der reißfesten Schicht (311) befindet sich eine Schicht aus Schüttgut, insbesondere Pflanzsubstrat (312) und/oder Kies,
- sie besteht aus dem Schichtaufbau (31) einer Dachbegrünung.

6. Dachaufständerungssystem gemäß einem der vorhergehenden Ansprüche,
**dadurch gekennzeichnet, dass** es wenigstens zwei Dachaufständerungen (1) umfasst, wobei die Trageteile (10) wenigstens zweier benachbarter Dachaufständerungen (1) über wenigstens eine Trageschiene (5) und/oder einen Windverband (7) miteinander verbunden sind, wobei die Basisteile (11) nicht unmittelbar miteinander verbunden sind.

7. Dachaufständerung (1) zur Verwendung auf einer Dachfläche (2), bevorzugt in einem Dachaufständerungssystem gemäß einem der Ansprüche 3 bis 6,
umfassend einen Basisteil (11) und einen Trageteil (10),
wobei der Basisteil (11) eine Fußplatte (110) und zwei von der Fußplatte (110) ausgehende Fußstützen (112, 113) aufweist und
wobei der Trageteil (10) mit dem Basisteil (11) über die Fußstützen (112, 113) verbindbar und weiterhin zum Befestigen wenigstens eines Gegenstandes (4, 5) ausgebildet ist,
**dadurch gekennzeichnet,**
**dass** die Fußplatte (110), abgesehen von gegebenenfalls vorhandenen Mitteln zur Befestigung der Fußstützen (112, 113), frei ist von Befestigungsmitteln zur Befestigung der Dachaufständerung an der Dachfläche (2) und/oder der Dachauflast (3) und insbesondere keine Durchgangsbohrungen aufweist.

8. Dachaufständerungssystem oder Dachaufständerung (1) gemäß einem der vorhergehenden Ansprüche,
**dadurch gekennzeichnet,**
**dass** der Gegenstand ein Solarpaneel (4) oder wenigstens eine Trageschiene (5), insbesondere zum Befestigen wenigstens eines Solarpaneels (4), ist.

9. Dachaufständerungssystem oder Dachaufständerung (1) gemäß einem der vorhergehenden Ansprüche,
**dadurch gekennzeichnet,**
**dass** die zwei Fußstützen (112, 113) auf der Fußplatte (110) einen mittleren Bereich (A) aufspannen, an den beidseitig Randbereiche (R112, R113) angrenzen, wobei ein an eine erste Fußstütze (112) angrenzender erster Randbereich (R112) in Richtung vom mittleren Bereich (A) nach außen eine geringere Länge (L112) aufweist als die Länge (L113) des zweiten Randbereichs (R113), der an die zweite Fußstütze (113) angrenzt.

10. Dachaufständerungssystem oder Dachaufständerung (1) gemäß Anspruch 9,
**dadurch gekennzeichnet,**
**dass** die Dachaufständerung (1) über der ersten Fußstütze (112) vertikal niedriger ausgebildet ist als über der zweiten Fußstütze (113).

11. Dachaufständerungssystem oder Dachaufständerung (1) gemäß einem der vorhergehenden Ansprüche,
**gekennzeichnet durch** wenigstens eines der folgenden Merkmale:
- der Basisteil (11) besteht aus Metall, insbesondere Edelstahl oder Aluminium, wobei die Fußstützen (112, 113) bevorzugt an die Fußplatte (110) geschweißt sind,
- die erste Fußstütze (112) ist kürzer ausgebildet als die zweite Fußstütze (113),
- es ist eine Markierung an einer der Fußstützen (112, 113) und/oder Tragestützen (101, 102) vorgesehen, die die Ausrichtung der Fußplatte (110) anzeigt,
- der Trageteil (10) weist eine der Anzahl der Fußstützen (112, 113) entsprechende Anzahl an mit den Fußstützen (112, 113) verbindbaren Tragestützen (101, 102) auf,
- Fußstützen (112, 113) und Tragestützen (101, 102) sind ineinander einsteckbar, wobei bevorzugt die Tragestützen (101, 102) in die Fußstützen (112, 113) eingeschoben werden können,
- Fußstützen (112, 113) und Tragestützen (101, 102) sind gegeneinander höhenverstellbar, sodass unterschiedliche Gesamthöhen der Dachaufständerung (1) einstellbar sind,
- je eine Fußstütze (112, 113) und eine Tragestütze (101, 102) sind mittels einer Befestigungseinrichtung (12) gegeneinander fixierbar, wobei die Befestigungseinrichtung (12) bevorzugt einen in komplementäre Durchgangsbohrungen (120) **durch** Fußstütze (112, 113) und Tragstütze (101, 102) geschobenen Bolzen (121) mit optionalem Sicherungssplint (122) umfasst und/oder wobei die Befestigungseinrichtung (12) bevorzugt oberhalb der Dachauflast (3) liegt,
- die Tragestützen (101, 102) sind über eine Tragestrebe (100) miteinander verbunden,
- der Trageteil (10) und insbesondere die Tragestrebe (100) weist eine Verstellschiene (104) auf, welche die Befestigung des Gegenstandes (4, 5) in unterschiedlichen Positionen ermöglicht, wobei insbesondere wenigstens eine Halterung (103) entlang der Verstellschiene (104) verschiebbar gelagert ist.

12. Verfahren (6) zur Installation eines Dachaufständerungssystems gemäß einem der Ansprüche 1 bis 6 auf einer Dachfläche (2), umfassend die Schritte:
a) Loses Aufstellen (60) wenigstens eines Basisteils (11) einer Dachaufständerung (1) auf der Dachfläche (2) oder auf einer auf der Dachfläche (2) aufliegenden Schutzschicht (30),
b) Auflegen (62) eines Dränageelements (310) und/oder einer reißfesten Schicht (311) auf die Dachfläche (2) oder auf eine auf der Dachfläche aufliegende Schutzschicht (30) und die Fußplatte (110) des wenigstens einen Basisteils (11),
c) Verbinden (63) eines Trageteils (10) der Dachaufständerung (1) mit dem Basisteil (11).

13. Verfahren (6) gemäß Anspruch 12,
**dadurch gekennzeichnet,**
**dass** vor dem Auflegen (62) ein Vorsehen (61) wenigstens einer Durchgangsöffnung (313) und/oder Einbuchtung (314) in dem Dränageelement (310) und/oder der reißfesten Schicht (311) einer Dachauflast (3) erfolgt und dass das Auflegen (62) derart erfolgt, dass wenigstens eine Fußstütze (112, 113) des Basisteils (11) durch die wenigstens eine Durchgangsöffnung (313) und/oder Einbuchtung (314) hindurch dringt.
